(19) Europäisches Patentamt / European Patent Office / Office européen des brevets

(11) **EP 4 133 539 B1**

(12) **EUROPEAN PATENT SPECIFICATION**

(45) Date of publication and mention of the grant of the patent:
**31.01.2024 Bulletin 2024/05**

(21) Application number: **21716456.5**

(22) Date of filing: **08.04.2021**

(51) International Patent Classification (IPC):
*H01M 6/18* (2006.01)   *H01M 10/0562* (2010.01)

(52) Cooperative Patent Classification (CPC):
**H01M 10/0562; H01M 6/185; H01M 6/188;**
Y02E 60/10

(86) International application number:
**PCT/EP2021/059132**

(87) International publication number:
**WO 2021/204922 (14.10.2021 Gazette 2021/41)**

(54) **LITHIUM ION CONDUCTING SOLID MATERIALS**

LITHIUMIONEN LEITENDE FESTSTOFFE

MATÉRIAU SOLIDE CONDUISANT LES IONS LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2020 EP 20169037**

(43) Date of publication of application:
**15.02.2023 Bulletin 2023/07**

(73) Proprietors:
• **BASF SE**
  **67056 Ludwigshafen am Rhein (DE)**
• **UNIVERSITY OF WATERLOO**
  **Waterloo, Ontario N2L 3G1 (CA)**

(72) Inventors:
• **ADELI, Parvin**
  **Waterloo, Ontario N2L 3G1 (CA)**

• **ZHIZHEN, Zhang**
  **Waterloo, Ontario N2L 3G1 (CA)**
• **NAZAR, Linda**
  **Waterloo, Ontario N2L 3G1 (CA)**
• **KULISCH, Joern**
  **67056 Ludwigshafen (DE)**
• **WU, Xiaohan**
  **67056 Ludwigshafen (DE)**

(74) Representative: **Eisenführ Speiser**
**Patentanwälte Rechtsanwälte PartGmbB**
**Am Kaffee-Quartier 3**
**28217 Bremen (DE)**

(56) References cited:
**WO-A1-2019/098245   WO-A1-2020/033809**
**US-A1- 2019 221 884**

**Description**

Described are a solid material which has ionic conductivity for lithium ions, a process for preparing said solid material, a use of said solid material as a solid electrolyte for an electrochemical cell, a solid structure selected from the group consisting of a cathode, an anode and a separator for an electrochemical cell comprising the solid material, and an electrochemical cell comprising such solid structure.

Due to the wide-spread use of all solid state lithium batteries, there is an increasing demand for solid state electrolytes having a high conductivity for lithium ions. An important class of such solid electrolytes are lithium argyrodites.

WO 2020/033809 A1 discloses a solid electrolyte comprising a lithium-argyrodite solid electrolyte of formula $Li_{6-a}PS_{5-a}X_{1+a}$, wherein a is about -0.3 to about 0.75, b is 0 to about 0.3, and X is selected from the group consisting of Cl, Br, I.

US 8,075,865 B2 discloses lithium argyrodites of formula (*)

$$Li_{(12-n-x)}B^{n+}X^{2-}_{6-x}Y^{-}_{x} \quad (*)$$

wherein

B is selected from the group consisting of P, As, Ge, Ga, Sb, Si, Sn, Al, In, Ti, V, Nb, and Ta,

X is selected from the group consisting of S, Se, and Te,

Y is selected from the group consisting of Cl, Br, I, F, CN, OCN, SCN, and $N_3$,

and $0 \leq x \leq 2$. For the specific compound $Li_6PS_5I$ an ionic conductivity of about $7 * 10^{-3}$ S/cm is reported in US 8,075,865 B2.

For the sake of improving ionic conductivity and/or chemical stability, a couple of further modifications of lithium argyrodites has been studied, including partial substitution of lithium by other metals. For instance, EP 3 407 412 A1 discloses an article for use in an electrochemical cell, comprising a compound of formula (**):

$$Li_x M_y Q_w P_z S_u X_t \quad (I)$$

wherein:

M is selected from the group consisting of Na, K, Fe, Mg, Ag, Cu, Zr, and Zn,

Q is absent or is selected from the group consisting of Cr, B, Sn, Ge, Si, Zr, Ta, Nb, V, P, Fe, Ga, Al, As, and combinations thereof, and wherein Q, when present, is different than M,

X is absent or is selected from the group consisting of halide and pseudohalide,

x is 8-22, y is 0.1-3, w is 0-3, z is 0.1-3, u is 7-20, and t is 0-8.

There is an ongoing need for lithium ion conductors which exhibit suitable ionic conductivity for application as solid electrolyte in an all-solid state lithium battery as well as electrochemical stability versus lithium metal.

It is an objective of the present disclosure to provide a solid material which may be used as a solid electrolyte for an electrochemical cell. In addition, there is provided a process for preparing said solid material, a use of said solid material as a solid electrolyte for an electrochemical cell, a solid structure selected from the group consisting of a cathode, an anode and a separator for an electrochemical cell comprising the solid material, and an electrochemical cell comprising such solid structure, wherein said solid structure comprises said solid material.

According to a first aspect, there is provided a solid material having a composition according to general formula (I)

$$Li_{6+2*n-x-m*y} M_y PS_{5+n-x} X_{1+x} \quad (I)$$

wherein

M is one or more selected from the group consisting of divalent metals Mg, Ca, Sr, Ba and Zn, and trivalent metals Sc, La, Al and Ga;

X is one or more selected from the group consisting of F, Cl, Br and I;

$0 \leq x \leq 0.8$, preferably $0.15 \leq x \leq 0.6$;

$0.01 \leq y \leq 0.25$, preferably $0.05 \leq y \leq 0.2$, more preferably $0.05 \leq y \leq 0.15$;

$0 \leq n \leq 0.05$;

m is 2 when M is a divalent metal and m is 3 when M is a trivalent metal.

A solid material according to the above-defined first aspect may have a composition according to general formula (I) wherein $0.15 \leq x \leq 0.6$.

A solid material according to the above-defined first aspect may have a composition according to general formula (I) wherein $0.05 \leq y \leq 0.2$, preferably $0.05 \leq y \leq 0.15$.

Especially, a solid material according to the above-defined first aspect may have a composition according to general formula (I) wherein $0.15 \leq x \leq 0.6$ and $0.05 \leq y \leq 0.2$. Further specifically, a solid material according to the above-defined first aspect may have a composition according to general formula (I) wherein $0.15 \leq x \leq 0.6$ and $0.05 \leq y \leq 0.15$.

Surprisingly it has been found that solid materials as defined above may exhibit favorable lithium ion conductivity as well as electrochemical stability versus lithium metal. Without wishing to be bound by any theory, it is assumed that due to the presence of the divalent resp. trivalent metal M in the solid material having a composition according to general formula (I) lithium vacancies are generated which results in an increase of the mobility and diffusivity of lithium ions.

A solid material according to the above-defined first aspect may be crystalline as detectable by the X-ray diffraction technique. A solid material is referred to as crystalline when it exhibits a long range order that is characteristic of a crystal, as indicated by the presence of clearly defined reflections in its X-ray diffraction pattern. In this context, a reflection is considered as clearly defined if its intensity is more than 10% above the background.

A solid material according to the above-defined first aspect may consist of a single phase or of more than one phase, e.g. a main phase (primary phase) and minor amounts of impurities and secondary phases. It is understood that formula (I) is an empirical formula (gross formula) as determinable by means of elemental analysis. Accordingly, formula (I) defines a composition which is averaged over all phases present in the solid material. However, a solid material according to the above-defined first aspect comprises at least one phase which as such has a composition according to formula (I). In case a crystalline solid material according to the above-defined first aspect contains more than one phase, then the weight fraction of phases which as such do not have a composition according to formula (I) (e.g. impurity phases, secondary phases) is so small that the composition averaged over all phases is according to formula (I). The total weight fraction of secondary phases and impurity phases may be 20 % or less, preferably 10 % or less, further preferably 5 % or less, most preferably 3 % or less, based on the total weight of the solid material. If present, the secondary phases and impurity phases mainly consist of the precursors used for preparing the solid material, e.g. LiX (wherein X is as defined above) and $Li_2S$, and sometimes impurity phases which may originate from impurities of the precursors or from products formed by side reactions of the precursors (e.g. $Li_3PS_4$ and $CaP_4O_{11}$). For details of preparing a solid material according to the above defined first aspect, see the information provided below in the context of the second aspect of this disclosure.

In certain cases, a solid material according to the above-defined first aspect is in the form of a polycrystalline powder, or in the form of single crystals.

A crystalline solid material according to the above-defined first aspect has an argyrodite structure characterized by the cubic space group F-43m. The argyrodite structure is determined by powder X-ray diffraction (XRD) measurements as generally known in the art. Details are described in the examples section.

In a solid material of general formula (I) the molar ratio between the total of elements X and P is defined as $X/P = a$. In a solid material of general formula (I), for the molar ratio $X/P = a$ the following condition is satisfied: $1 \leq a \leq 1.8$. In certain cases, for the molar ratio $X/P = a$ the following condition is satisfied preferably $1.45 \leq a \leq 1.6$.

In a solid material of general formula (I) the molar ratio between Li and P is defined as $Li/P = b$. In a solid material of general formula (I), for the molar ratio $Li/P = b$ the following condition is satisfied: $4.05 \leq b < 6.08$.

In a solid material of general formula (I) the molar ratio between the total of metals M and P is defined as $M/P = c$. In a solid material of general formula (I), for the molar ratio $M/P = c$ the following condition is satisfied: $0.01 \leq c \leq 0.25$. In certain cases, for the molar ratio $M/P = c$ the following condition is satisfied $0.01 \leq c \leq 0.15$. In certain cases, for the molar ratio $M/P = c$ the following condition is satisfied $0.01 \leq c \leq 0.12$.

In certain cases, for the molar ratio $X/P = a$ the following condition is satisfied: $1.45 \leq a \leq 1.6$; and for the molar ratio $M/P = c$ the following condition is satisfied: $0.01 \leq c \leq 0.15$. In certain cases, for the molar ratio $X/P = a$ the following condition is satisfied: $1.45 \leq a \leq 1.6$; and for the molar ratio $M/P = c$ the following condition is satisfied: $0.01 \leq c \leq 0.12$.

Surprisingly it has been found that adjusting the molar ratio between the total of elements X and the total of metals M, $X/M = a/c$, may have a favorable influence on the ionic conductivity. In this regard solid materials of general formula (I) are preferred wherein $14 \leq a/c \leq 16$, more preferably $15.30 \leq a/c \leq 15.55$.

A solid material according to the above-defined first aspect may have an ionic conductivity of 1 mS/cm or more, in some cases 3 mS/cm or more, in further specific cases 6 mS/cm or more, in each case at a temperature of 25 °C. The ionic conductivity is determined in the usual manner known in the field of battery materials development by means of electrochemical impedance spectroscopy in a blocking electrode configuration (for details see examples section below).

At the same time, a solid material according to the above-defined first aspect may have an almost negligible electronic conductivity. More specifically the electronic conductivity may be at least 3 orders of magnitude lower than the ionic conductivity, preferably at least 5 orders of magnitude lower than the ionic conductivity. In certain cases, a solid material according to the above-defined first aspect exhibits an electronic conductivity of $10^{-9}$ S/cm or less or even of $10^{-10}$ S/cm or less. The electronic conductivity is determined in the usual manner known in the field of battery materials development by means of direct-current (DC) polarization measurements at different voltages.

A solid material according to the above-defined first aspect may have a composition according to general formula (I) wherein X is Cl (chlorine), i.e. a composition according to general formula (Ia)

$$Li_{6+2*n-x-m*y}M_yPS_{5+n-x}Cl_{1+x} \qquad (Ia)$$

wherein M, m, n, x and y have the same meaning as defined above for general formula (I).

A solid material according to the above-defined first aspect may have a composition according to general formula (Ia) wherein $0.15 \leq x \leq 0.6$.

A solid material according to the above-defined first aspect may have a composition according to general formula (Ia) wherein $0.05 \leq y \leq 0.2$, preferably $0.05 \leq y \leq 0.15$.

More specifically, a solid material according to the above-defined first aspect may have a composition according to general formula (Ia) wherein $0.15 \leq x \leq 0.6$ and $0.05 \leq y \leq 0.2$. Still more specifically, a solid material according to the above-defined first aspect may have a composition according to general formula (Ia) wherein $0.15 \leq x \leq 0.6$ and $0.05 \leq y \leq 0.15$.

A first group of specific solid materials according to the above-defined first aspect consists of solid materials having a composition according to general formula (I) wherein M is one or more selected from the group consisting of Mg, Ca, Sr, Ba and Zn (i.e. divalent metals), so that m is 2. Thus, a solid material of said first group has a composition according to general formula (Ib)

$$Li_{6+2*n-x-2*y}M_yPS_{5+n-x}X_{1+x} \qquad (Ib)$$

wherein M, X, n, x and y have the same meaning as defined above for general formula (I).

A solid material of said first group may have a composition according to general formula (Ib) wherein $0.15 \leq x \leq 0.6$.

A solid material of said first group may have a composition according to general formula (Ib) wherein $0.01 \leq y \leq 0.2$, preferably $0.05 \leq y \leq 0.15$.

A solid material of said first group may have a composition according to general formula (Ib) wherein n = 0 or n = 0.05.

A solid material of said first group may have a composition according to general formula (Ib) wherein X is Cl.

Especially, a solid material of said first group may have a composition according to general formula (Ib) wherein $0.15 \leq x \leq 0.6$. $0.01 \leq y \leq 0.2$; and X is Cl. Further specifically, a solid material of said first group may have a composition according to general formula (Ib) wherein $0.15 \leq x \leq 0.6$, $0.05 \leq y \leq 0.15$; and X is Cl.

A solid material of said first group may have a composition according to general formula (Ib) wherein M is Ca.

Especially, a solid material of said first group may have a composition according to general formula (Ib) wherein $0.15 \leq x \leq 0.6$, $0.01 \leq y \leq 0.2$; and M is Ca. Further specifically, a solid material of said first group may have a composition according to general formula (Ib) wherein $0.15 \leq x \leq 0.6$, $0.05 \leq y \leq 0.15$; and M is Ca.

A solid material of said first group may have a composition according to general formula (Ib) wherein M is Ca and X is Cl.

Especially, a solid material of said first group may have a composition according to general formula (Ib) wherein $0.15 \leq x \leq 0.6$, $0.01 \leq y \leq 0.2$; M is Ca and X is Cl. Further specifically, a solid material of said first group may have a composition according to general formula (Ib) wherein $0.15 \leq x \leq 0.6$, $0.05 \leq y \leq 0.15$; M is Ca and X is Cl.

A solid material of said first group may have a composition according to general formula (Ib) wherein $0.15 \leq x \leq 0.6$, $0.01 \leq y \leq 0.2$; n = 0, M is Ca and X is Cl. Further specifically, a solid material of said first group may have a composition according to general formula (Ib) wherein $0.15 \leq x \leq 0.6$, $0.05 \leq y \leq 0.15$; n = 0, M is Ca and X is Cl.

A solid material of said first group may have a composition according to general formula (Ib) wherein $0.15 \leq x \leq 0.6$, $0.01 \leq y \leq 0.2$; n = 0.05, M is Ca and X is Cl. Further specifically, a solid material of said first group have a composition according to general formula (Ib) wherein $0.15 \leq x \leq 0.6$, $0.05 \leq y \leq 0.15$; n = 0.05; M is Ca and X is Cl.

A second group of specific solid materials according to the above-defined first aspect consists of solid materials having a composition according to general formula (I) wherein M is one or more selected from the group consisting of Sc, La, Al and Ga (i.e. trivalent metals), so that m is 3. Thus, a solid material of said second group has a composition according to general formula (Ic)

$$Li_{6+2*n-x-3*y}M_yPS_{5+n-x}X_{1+x} \qquad (Ic)$$

wherein M, X, n, x and y have the same meaning as defined above for general formula (I).

A solid material of said second group may have a composition according to general formula (Ic) wherein $0.15 \leq x \leq 0.6$.

A solid material of said second group may have a composition according to general formula (Ic) wherein $0.01 \leq y \leq 0.15$, preferably $0.05 \leq y \leq 0.15$.

A solid material of said second group may have a composition according to general formula (Ic) wherein n = 0.

A solid material of said second group may have a composition according to general formula (Ic) wherein X is Cl.

Especially, a solid material of said second group may have a composition according to general formula (Ic) wherein $0.15 \leq x \leq 0.6$, $0.01 \leq y \leq 0.15$; and X is Cl. Further specifically, a solid material of said second group may have a composition according to general formula (Ic) wherein $0.15 \leq x \leq 0.6$, $0.05 \leq y \leq 0.15$; and X is Cl.

A solid material of said second group may have a composition according to general formula (Ic) wherein M is Al or M is Ga.

Especially, a solid material of said second group may have a composition according to general formula (Ic) wherein $0.15 \leq x \leq 0.6$, $0.01 \leq y \leq 0.15$; and M is Al or Ga. Further specifically, a solid material of said second group may have a composition according to general formula (Ic) wherein $0.15 \leq x \leq 0.6$, $0.05 \leq y \leq 0.15$; and M is Al or Ga.

A solid material of said second group may have a composition according to general formula (Ic) wherein M is Al and X is Cl.

A solid material of said second group may have a composition according to general formula (Ic) wherein M is Ga and X is Cl.

Especially, a solid material of said second group may have a composition according to general formula (Ic) wherein $0.15 \leq x \leq 0.6$, $0.01 \leq y \leq 0.15$; M is Al and X is Cl. Further specifically, a solid material of said second group may have a composition according to general formula (Ic) wherein $0.15 \leq x \leq 0.6$, $0.05 \leq y \leq 0.15$; M is Al and X is Cl.

Especially, a solid material of said second group may have a composition according to general formula (Ic) wherein $0.15 \leq x \leq 0.6$, $0.01 \leq y \leq 0.15$; M is Ga and X is Cl. Further specifically, a solid material of said second group may have a composition according to general formula (Ic) wherein $0.15 \leq x \leq 0.6$, $0.05 \leq y \leq 0.15$; M is Ga and X is Cl.

A solid material of said second group may have a composition according to general formula (Ic) wherein $0.15 \leq x \leq 0.6$, $0.01 \leq y \leq 0.15$; n = 0, M is Al and X is Cl. Further specifically, a solid material of said second group may have a composition according to general formula (Ic) wherein $0.15 \leq x \leq 0.6$, $0.05 \leq y \leq 0.15$; M is Al and X is Cl.

A solid material of said second group may have a composition according to general formula (Ic) wherein $0.15 \leq x \leq 0.6$, $0.01 \leq y \leq 0.15$; n = 0, M is Ga and X is Cl. Further specifically, a solid material of said second group may have a composition according to general formula (Ic) wherein $0.15 \leq x \leq 0.6$, $0.05 \leq y \leq 0.15$; M is Ga and X is Cl.

Preferred solid materials according to the first aspect as defined above are those having one or more of the specific features disclosed above.

According to a second aspect, there is provided a process for obtaining a solid material according to the above-defined first aspect. Said process comprises the following steps:

a) preparing or providing a reaction mixture comprising the precursors

(1) $Li_2S$,
and/or
Li and S in elemental form;

(2) one or more sulfides of phosphorus;

(3) one or more compounds LiX wherein X is selected from the group consisting of F, Cl, Br and I;

(4) one or more sulfides of metals M selected from the group consisting of divalent metals Mg, Ca, Sr, Ba and Zn, and trivalent metals Sc, La, Al and Ga
and/or
S in elemental form as well as one or more metals M selected from the group consisting of divalent metals Mg, Ca, Sr, Ba and Zn, and trivalent metals Sc, La, Al and Ga, in each case in elemental form;

(5) optionally one or more halides $MX_m$, wherein X is selected from the group consisting of F, Cl, Br and I; M is selected from the group consisting of divalent metals Mg, Ca, Sr, Ba and Zn, and trivalent metals Sc, La, Al and Ga; and m is 2 when M is a divalent metal and m is 3 when M is a trivalent metal;

wherein in said reaction mixture the molar ratio of the elements Li, M, P, S and X matches general formula (I);

b) heat-treating the reaction mixture in a temperature range of from 500 °C to 800 °C for a total duration of from 3 hours to 350 hours so that a reaction product is formed, and cooling the obtained reaction product so that a solid material having a composition according to general formula (I) is obtained.

In step a) of the process according to the above-defined second aspect, a reaction mixture comprising precursors for the reaction product to be formed in step b) is provided. Said precursors are

(1) $Li_2S$,
and/or
both of Li and S in elemental form;

(2) one or more sulfides of phosphorus;

(3) one or more compounds LiX wherein X is selected from the group consisting of F, Cl, Br and I;

(4) one or more sulfides of metals M selected from the group consisting of divalent metals Mg, Ca, Sr, Ba and Zn, and trivalent metals Sc, La, Al and Ga
and/or
S in elemental form as well as one or more metals M selected from the group consisting of divalent metals Mg, Ca, Sr, Ba and Zn, and trivalent metals Sc, La, Al and Ga, in each case in elemental form;

wherein in said reaction mixture the molar ratio of the elements Li, M, P, S and X matches general formula (I).

In certain cases, the reaction mixture comprises the above-defined precursors (1), (2), (3) and (4), and further comprises

(5) optionally one or more halides $MX_m$, wherein X is selected from the group consisting of F, Cl, Br and I; M is selected from the group consisting of divalent metals Mg, Ca, Sr, Ba and Zn, and trivalent metals Sc, La, Al and Ga; and m is 2 when M is a divalent metal and m is 3 when M is a trivalent metal,

wherein in said reaction mixture the molar ratio of the elements Li, M, P, S and X matches general formula (I).

Preferably, the reaction mixture consists of the above-defined precursors (1), (2), (3) and (4) resp. (1), (2), (3), (4) and (5).

In each of precursors (3) and (5), X may be selected independently. Preferably, in each of precursors (3) and (5), X is the same, preferably Cl. A reaction mixture wherein X in all precursors (3) and (5) is Cl is suitable for preparing a solid material having a composition according to general formula (Ia) as defined above.

Precursor (1) may be provided in the form of $Li_2S$, and/or both of Li (lithium) and S (sulfur) may be provided in elemental form. Preferably, precursor (1) is $Li_2S$.

Preferably precursor (2) is $P_2S_5$.

Preferably, precursor (3) is LiCl.

Precursor (4) may be provided in the form of one or more sulfides of metals M selected from the group consisting of divalent metals Mg, Ca, Sr, Ba and Zn, and trivalent metals Sc, La, Al and Ga; and/or S (sulfur) as well as one or more metals M selected from the group consisting of divalent metals Mg, Ca, Sr, Ba and Zn, and trivalent metals Sc, La, Al and Ga may be provided in elemental form. Preferably, precursor (4) is in the form of one or more sulfides of metals M selected from the group consisting of divalent metals Mg, Ca, Sr, Ba and Zn, and trivalent metals Sc, La, Al and Ga.

In the reaction mixture provided in step a), for the molar ratio between the total of elements X and P which is defined as X/P = a, the following condition is satisfied: $1 \leq a \leq 1.8$. In certain specific cases, the following condition is satisfied: $1.45 \leq a \leq 1.6$.

In the reaction mixture provided in step a), for the molar ratio between Li and P which is defined as Li/P = b, the following condition is satisfied: $4.05 \leq b < 6.08$.

In the reaction mixture provided in step a), for the molar ratio between the total of metals M and P which is defined as M/P = c, the following condition is satisfied: $0.01 \leq c \leq 0.25$. In certain specific cases, the following condition is satisfied: $0.01 \leq c \leq 0.15$. In certain specific cases, the following condition is satisfied: $0.01 \leq c \leq 0.12$.

In certain more specific cases, in the reaction mixture provided in step a) for the molar ratio X/P = a the following condition is satisfied: $1.45 \leq a \leq 1.6$; and for the molar ratio M/P = c the following condition is satisfied: $0.01 \leq c \leq 0.15$.

In certain more specific cases, in the reaction mixture provided in step a) for the molar ratio X/P = a the following condition is satisfied: $1.45 \leq a \leq 1.6$; and for the molar ratio M/P = c the following condition is satisfied: $0.01 \leq c \leq 0.12$.

In the reaction mixture provided in step a), for the molar ratio between the total of elements X and the total of metals M, which is defined as X/M = a/c the following condition may be satisfied: $14 \leq a/c \leq 16$, more preferably $15.30 \leq a/c \leq 15.55$.

In certain processes according to the above-defined second aspect, the precursor (4) is one or more sulfides of metals M selected from the group consisting of divalent metals Mg, Ca, Sr, Ba and Zn, and/or S (sulfur) in elemental form as well as one or more metals M selected from the group consisting of divalent metals Mg, Ca, Sr, Ba and Zn in elemental form; and precursor (5) - when present - is one or more halides $MX_2$ wherein X is selected from the group consisting of F, Cl, Br and I; and M is selected from the group consisting of divalent metals Mg, Ca, Sr, Ba and Zn. Such processes are suitable for preparing solid materials having a composition according to general formula (Ib) as defined above.

Thus, a reaction mixture suitable for preparing a solid material having a composition according to general formula (Ib) comprises the precursors

(1) $Li_2S$,
and/or
Li and S in elemental form;

(2) one or more sulfides of phosphorus;

(3) one or more compounds LiX wherein X is selected from the group consisting of F, Cl, Br and I;

(4) one or more sulfides of metals M selected from the group consisting of divalent metals Mg, Ca, Sr, Ba and Zn, and/or
S in elemental form as well as one or more metals M selected from the group consisting of divalent metals Mg, Ca, Sr, Ba and Zn in elemental form;

(5) optionally one or more halides $MX_2$ wherein X is selected from the group consisting of F, Cl, Br and I; M is selected from the group consisting of divalent metals Mg, Ca, Sr, Ba and Zn;
wherein in said reaction mixture the molar ratio of the elements Li, M, P, S and X matches general formula (Ib).

Preferably, the reaction mixture consists of the above-defined precursors (1), (2), (3) and (4) resp. (1), (2), (3), (4) and (5).

In each of precursors (3) and (5), X may be selected independently. Preferably, in each of precursors (3) and (5), X is the same, preferably Cl.

Precursor (1) may be provided in the form of $Li_2S$, and/or Li (lithium) and S (sulfur) may be provided in elemental form. Preferably, precursor (1) is $Li_2S$.

Preferably precursor (2) is $P_2S_5$.

Preferably, precursor (3) is LiCl.

Precursor (4) may be provided in the form of one or more sulfides of metals M selected from the group consisting of divalent metals Mg, Ca, Sr, Ba and Zn, and/or S (sulfur) as well as one or more metals M selected from the group consisting of divalent metals Mg, Ca, Sr, Ba and Zn may be provided in elemental form. Preferably, precursor (4) is in the form of one or more sulfides of metals M selected from the group consisting of divalent metals Mg, Ca, Sr, Ba and Zn.

In certain cases, M is Ca. In such cases precursor (4) is preferably CaS, and precursor (5) may be omitted.

Thus, a reaction mixture suitable for preparing a solid material having a composition according to general formula (Ib) may consist of the precursors

(1) $Li_2S$

(2) $P_2S_5$

(3) LiCl

(4) CaS

wherein in said reaction mixture the molar ratio of the elements Li, Ca, P, S and X matches general formula (Ib).

In certain other processes according to the above-defined second aspect, the precursor (4) is one or more sulfides of metals M selected from the group consisting of trivalent metals, Sc, La, Al and Ga and/or S (sulfur) in elemental form as well as one or more metals M selected from the group consisting of trivalent metals Sc, La, Al and Ga in elemental form; and precursor (5) - when present - is one or more halides $MX_3$, wherein X is selected from the group consisting of F, Cl, Br and I; and M is selected from the group consisting of trivalent metals Sc, La, Al and Ga. Such processes are suitable for preparing solid materials having a composition according to general formula (Ic) as defined above.

Thus, a reaction mixture suitable for preparing a solid material having a composition according to general formula (Ic) comprises the precursors

(1) $Li_2S$,
and/or
Li and S in elemental form;

(2) one or more sulfides of phosphorus;

(3) one or more compounds LiX wherein X is selected from the group consisting of F, Cl, Br and I;

(4) one or more sulfides of metals M selected from the group consisting of trivalent metals Sc, La, Al and Ga,
and/or
S in elemental form as well as one or more metals M selected from the group consisting of trivalent metals Sc, La, Al and Ga in elemental form;

(5) optionally one or more halides $MX_3$, wherein X is selected from the group consisting of F, Cl, Br and I; M is selected from the group consisting of trivalent metals Sc, La, Al and Ga;

wherein in said reaction mixture the molar ratio of the elements Li, M, P, S and X matches general formula (Ic).

Preferably, the reaction mixture consists of the above-defined precursors (1), (2), (3) and (4) resp. (1), (2), (3), (4) and (5).

In each of precursors (3) and (5), X may be selected independently. Preferably, in each of precursors (3) and (5), X is the same, preferably Cl. Preferably, precursor (3) is LiCl. Precursor (1) may be provided in the form of $Li_2S$, and/or Li (lithium) and S (sulfur) may be provided in elemental form. Preferably, precursor (1) is $Li_2S$.

Preferably precursor (2) is $P_2S_5$.

Preferably, precursor (3) is LiCl.

Precursor (4) may be provided in the form of one or more sulfides of metals M selected from the group consisting of trivalent metals Sc, La, Al and Ga, and/or S (sulfur) as well as one or more metals M selected from the group consisting of trivalent metals Sc, La, Al and Ga may be provided in elemental form. Preferably, precursor (4) is in the form of one or more sulfides of metals M selected from the group consisting of trivalent metals Sc, La, Al and Ga.

In certain cases, M is Ga or Al. In such cases precursor (4) is preferably $Al_2S_3$ resp. $Ga_2S_3$, and precursor (5) may be omitted.

Thus, a reaction mixture suitable for preparing a solid material having a composition according to general formula (Ic) may consist of the precursors

(1) $Li_2S$

(2) $P_2S_5$

(3) LiCl

(4) $Al_2S_3$ resp. $Ga_2S_3$.

wherein in said reaction mixture the molar ratio of the elements Li, P, S, X and Al resp. Ga matches general formula (Ic).

In step a) the reaction mixture may be obtained by mixing the precursors. Mixing the precursors may be performed by means of grinding the precursors together. Grinding can be done using any suitable means.

The reaction mixture which is prepared or provided in step a) may be in the form of a powder, or in the form of pellets. For instance, the reaction mixture which is prepared or provided in step a) may be formed into pellets, which are heat-treated in step b). Then, a solid material in the form of pellets or chunks is obtained, which may be ground into powder for further processing.

It is useful that in step a) any handling is performed under a protective gas atmosphere.

In step b) of the process according to the above-defined second aspect, the reaction mixture is allowed to react so that a solid material having a composition according to general formula (I) is obtained. In other words, in step b) the precursors in the reaction mixture react with each other to obtain a solid material having a composition according to general formula (I).

The reaction mixture prepared or provided in step a) is heat-treated in step b) to enable the reaction of the precursors. Heat-treating may be performed in a closed vessel. The closed vessel may be a sealed quartz tube or any other type of container which is capable of withstanding the temperature of the thermal treatment and is not subject to reaction with any of the precursors, such as a glassy carbon crucible or a tantalum crucible.

In step b) the reaction mixture may be heat-treated in a temperature range of from 500 °C to 800 °C for a total duration of 3 hours to 350 hours so that a reaction product is formed. More specifically, in step b) the reaction mixture may be heat-treated in a temperature range of from 500 °C to 600 °C for a total duration of 4 hours to 9 hours.

When the duration of the heat treatment of step b) is completed, the formed reaction product is allowed to cool down. Thus, a solid material having a composition according to general formula (I) is obtained. Cooling of the reaction product is preferably performed using a cooling rate of 0.5 to 10 °C per minute.

A specific process according to the second aspect as described herein comprises the steps

a) preparing or providing a solid reaction mixture comprising the precursors (1), (2), (3), (4) and optionally (5) as defined above, preferably a reaction mixture consisting of the precursors (1), (2), (3), (4) and optionally (5) as defined above

b) heat-treating the reaction mixture in a temperature range of 500 °C to 800 °C for a total duration of 3 hours to 350 hours so that a reaction product is formed, and cooling the obtained reaction product so that a solid material having a composition according to general formula (I) is obtained.

It is noteworthy that a solid material prepared as described above exhibits high ionic conductivity so that further annealing to cure structural defects is not necessary. This is an important advantage because it enables the solid material to be employed as electrolyte for an all-solid-state battery in the form of cold-pressed pellets.

Preferred processes according to the second aspect as defined herein are those having one or more of the specific features disclosed above.

A solid material according to the above-defined first aspect resp. obtained by the process according to the above-defined second aspect can be used as a solid electrolyte for an electrochemical cell. Herein the solid electrolyte may form a component of a solid structure for an electrochemical cell, wherein said solid structure is selected from the group consisting of cathode, anode and separator. Accordingly, a solid material according to the above-defined first aspect resp. obtained by the process according to the above-defined second aspect can be used (if necessary in combination with additional components) for producing a solid structure for an electrochemical cell, such as a cathode, an anode or a separator.

Thus, the present disclosure further provides the use of a solid material according to the above-defined first aspect resp. obtained by the process according to the above-defined second aspect as a solid electrolyte for an electrochemical cell. Herein, the solid material according to the above-defined first aspect resp. obtained by the process according to the above-defined second aspect may have a composition according to formula (Ia) as defined above resp. according to formula (Ib) or to formula (Ic) as defined above. Regarding specific and preferred solid materials according to the above-defined first aspect resp. obtained by the process according to the above-defined second aspect, the same applies as disclosed above in the context of the first aspect.

More specifically, the present disclosure further provides the use of a solid material according to the above-defined first aspect resp. obtained by the process according to the above-defined second aspect as a component of a solid structure for an electrochemical cell, wherein said solid structure is selected from the group consisting of cathode, anode and separator.

In the context of the present disclosure, the electrode where during discharging a net negative charge occurs is called the anode and the electrode where during discharging a net positive charge occurs is called the cathode. Suitable electrochemically active cathode materials and suitable electrochemically active anode materials are known in the art. The cathode of an all-solid-state electrochemical cell usually comprises beside an active cathode material as a further component a solid electrolyte. Also the anode of an all-solid-state electrochemical cell usually comprises a solid electrolyte as a further component beside an active anode material. Said solid electrolyte may be a solid material according to the above-defined first aspect resp. obtained by the process according to the above-defined second aspect.

In an electrochemical cell, a separator electronically separates a cathode and an anode from each other. In an all solid state electrochemical cell, the separator comprises a solid electrolyte. Said solid electrolyte may be a solid material according to the above-defined first aspect resp. obtained by the process according to the above-defined second aspect.

The present disclosure further provides a solid structure for an electrochemical cell, wherein the solid structure is selected from the group consisting of cathode, anode and separator, wherein the solid structure for an electrochemical cell comprises a solid material according to the above-defined first aspect resp. obtained by the process according to the above-defined second aspect. Herein, the solid material according to the above-defined first aspect resp. obtained by the process according to the above-defined second aspect may have a composition according to formula (Ia) as defined above resp. according to formula (Ib) or formula (Ic) as defined above.

The form of the solid structure for an electrochemical cell, in particular for an all-solid-state lithium battery, depends in particular on the form of the electrochemical cell itself.

The present disclosure further provides a solid structure for an electrochemical cell, wherein the solid structure is selected from the group consisting of cathode, anode and separator, wherein the solid structure for an electrochemical cell comprises a solid material according to the above-defined first aspect resp. obtained by the process according to the above-defined second aspect. More specifically, there is provided a solid structure as defined above wherein in certain preferred cases a solid material according to the above-defined first aspect resp. obtained by the process according to the above-defined second aspect is in direct contact with lithium metal.

The present disclosure further provides an electrochemical cell comprising a solid material according to the above-defined first aspect resp. obtained by the process according to the above-defined second aspect. In said electrochemical cell, the solid material according to the above-defined first aspect resp. obtained by the process according to the above-defined second aspect may form a component of one or more solid structures selected from the group consisting of cathode, anode and separator. More specifically, there is provided an electrochemical cell as defined above wherein in certain preferred cases a solid material according to the above-defined first aspect resp. obtained by the process according to the above-defined second aspect may be in direct contact with lithium metal.

The above-defined electrochemical cell may be a rechargeable electrochemical cell comprising the following constituents

α) at least one anode,

β) at least one cathode,

γ) at least one separator,

wherein at least one of the three constituents is a solid structure selected from the group consisting of cathode, anode and separator comprises a solid material according to the above-defined first aspect resp. obtained by the process according to the above-defined second aspect.

Suitable electrochemically active cathode materials and suitable electrochemically active anode materials are known in the art. In an electrochemical cell as described above the anode α) may comprise graphitic carbon, metallic lithium or a metal alloy comprising lithium as the anode active material. Due to its superior electrochemical stability in direct contact with lithium metal, in certain preferred cases in a solid structure as defined above a solid material according to the above-defined first aspect resp. obtained by the process according to the above-defined second aspect may be in direct contact with an anode comprising lithium metal, so that no protecting layer is needed between them.

Electrochemical cells as described above may be alkali metal containing cells, especially lithium-ion containing cells. In lithium-ion containing cells, the charge transport is effected by $Li^+$ ions.

The electrochemical cell may have a disc-like or a prismatic shape. The electrochemical cells can include a housing that can be from steel or aluminum.

A plurality of electrochemical cells as described above may be combined to an all solid-state battery, which has both solid electrodes and solid electrolytes. A further aspect of the present disclosure refers to batteries, more specifically to an alkali metal ion battery, in particular to a lithium ion battery comprising at least one electrochemical cell as described above, for example two or more electrochemical cells as described above. Electrochemical cells as described above can be combined with one another in alkali metal ion batteries, for example in series connection or in parallel connection. Series connection is preferred. The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of this disclosure is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated further by the following examples which are not limiting.

Examples

1. Preparation of solid materials

Reaction mixtures consisting of the precursors

(1) $Li_2S$ (Alfa Aesar, 99.9%),

(2) $P_2S_5$ (Sigma-Aldrich, 99%),

(3) LiCl anhydrous beads (Sigma-Aldrich, 99.9%),

(4) one of CaS (Alfa Aesar, 99%), $Al_2S_3$ (Sigma-Aldrich, 98%) and $Ga_2S_3$ (Alfa Aesar, 99.99%)

in the proportions to obtain the target compositions (target stoichiometries) indicated in table 1 resp. 2 were prepared by grinding the precursors in an agate mortar for 15 minutes in an argon filled glovebox (MBraun, $O_2$ and $H_2O$ content below 1 ppm). The ground reaction mixture with a typical weight of 0.5 gram was pelletized in a die (13 mm diameter) at 2 metric tons. The resulting pellets were transferred into quartz ampules which were sealed under vacuum. Glassy carbon crucibles were used to avoid direct contact of the pellets with the quartz ampules. Before transferring the pellets into the quartz ampules, said quartz ampules (inner diameter of 13 mm and length of 8 cm) were preheated for one day at 300 °C to avoid traces of water meddling in the reaction. The heat treatment of the pelletized reaction mixture was carried out at 550 °C for 5 hours in a tube furnace with a heating rate of 0.5 °C/min. Subsequently, each of the obtained solid materials was ground in an argon filled glovebox (MBraun, $O_2$ and $H_2O$ content below 1 ppm), and loaded for XRD analysis into a 0.3 mm diameter quartz capillary which was sealed.

For comparison, $Li_6PS_5Cl$ was obtained in the same manner except that the reaction mixture consisted of above-defined precursors (1)-(3) while precursor (4) was omitted.

2. Ionic and electronic conductivity

Electrochemical impedance spectroscopy (EIS) in blocking electrode configuration was employed to determine the ionic conductivities of the solid materials which were in the form of pellets. To obtain a pellet, a powder sample of the material was sandwiched between two stainless steel rods and cold-pressed at 2 tons (diameter of 10 mm) by a uniaxial hydraulic press. The thickness of the pellets obtained in this way (measured by an accurate digital caliper) ranged from 0.5 to 1.1 mm. EIS was carried out using a cell wherein the pellet is sandwiched between two metal foils which act as blocking electrodes. Impedance spectra were recorded with 100 mV amplitude in the frequency range of 1 MHz to 100 mHz at 298 K using a VMP3 potentiostat/galvanostat (Bio-logic).

For temperature dependent conductivity measurements, impedance spectra were recorded in the frequency range of 35 MHz to 100 mHz with MTZ-35 impedance analyzer (Bio-Logic) controlled by the MT-LAB (Bio-Logic) software from 298 K to 338 K at 5 K intervals.

Data analysis was performed using the EC-Lab software and the activation energy was determined from the slope of the Arrhenius plot.

Ionic conductivity of all materials (obtained from the fit of the real-axis impedance intercept in the Nyquist plot of the electrochemical impedance, average of two samples in each case) is given in tables 1 and 2 below. In table 1, activation energy (Ea) values obtained from impedance spectroscopy as explained above and from $^7$Li PFG-NMR (see below) at different temperatures are presented, too. For experimental details, see section 3.1 below. For detailed discussion, see section 5 below.

Table 1

| Material composition | σ / mS/cm | $E_a$ (EIS) [eV] $\pm$ 0.01 | $E_a$ (PFG) [eV] |
|---|---|---|---|
| $Li_6PS_5Cl$ (comparison) | 3.12 | 0.34 | 0.35 |
| $Li_{5.9}Ca_{0.05}PS_5Cl$ | 3.50 | - | - |
| $Li_{5.8}Ca_{0.1}PS_5Cl$ | 4.26 | 0.35 | 0.34 |
| $Li_{5.7}Ca_{0.15}PS_5Cl$ | 5.18 | 0.34 | 0.33 |
| $Li_{5.6}Ca_{0.2}PS_5Cl$ | 3.40 | - | - |
| $Li_{5.55}Ca_{0.1}PS_{4.75}Cl_{1.25}$ | 6.76 | 0.33 | 0.32 |
| $Li_{5.45}Ca_{0.15}PS_{4.75}Cl_{1.25}$ | 6.06 | - | - |
| $Li_{5.425}Cao_{0.1}PS_{4.625}Cl_{1.375}$ | 7.24 | 0.31 | 0.31 |
| $Li_{5.3}Ca_{0.1}PS_{4.5}Cl_{1.5}$ | 7.74 | 0.31 | 0.30 |
| $Li_{5.35}Ca_{0.1}PS_{4.5}Cl_{1.55}$ (pellet) | 10.2 | 0.3 | 0.29 |
| $Li_{5.35}Ca_{0.1}PS_{4.5}Cl_{1.55}$ (powder) | | | 0.30 |

When x = 0, increase of the Ca content y results in an increase of the ionic conductivity until y exceeds 0.15. At a Ca content of y = 0.1, increase of the Cl content (x = 0, 0.25, 0.375, 0.5, 0.55) results in a steady increase of the ionic conductivity. The same applies at a Ca content of y = 0.15 when the chlorine content is increased from x = 0 up to x = 0.25, although materials having a Ca content y = 0.15 exhibit a lower ionic conductivity than the corresponding materials having the same Cl content but a Ca content of y = 0.1.

Table 2

| Material composition | σ / mS/cm |
|---|---|
| $Li_6PS_5Cl$ (comparison) | 3.12 |
| $Li_{5.7}Al_{0.1}PS_5Cl$ | 3.70 |
| $Li_{5.4}Al_{0.2}PS_5Cl$ | 3.60 |
| $Li_{5.45}Al_{0.1}PS_{4.75}Cl_{1.25}$ | 5.69 |
| $Li_{5.15}Al_{0.2}PS_{4.75}Cl_{1.25}$ | 3.58 |
| $Li_{5.85}Ga_{0.05}PS_5Cl$ | 3.74 |
| $Li_{5.7}Gao_{0.1}PS_5Cl$ | 3.89 |
| $Li_{5.4}Ga_{0.2}PS_5Cl$ | 4.05 |
| $Li_{5.45}Ga_{0.1}PS_{4.75}Cl_{1.25}$ | 4.81 |

When x= 0, increase of the content of Al resp. Ga from y = 0 to y = 0.1 results in an increase of the ionic conductivity, while further increase up to y = 0.2 only for Ga results in a further increase of the ionic conductivity, but not for Al. At an Al content of y = 0.1, increase of the Cl content (x = 0, 0.15, 0.25, 0.35) results in an increase of the ionic conductivity until x exceeds 0.25. At a Ga content of y = 0.1, increase of the Cl content so that x raises from x = 0 to x = 0.25, results in an increase of the ionic conductivity. When the Al content is y = 0.2, increase of the Cl content so that x raises from x = 0 to x = 0.25 appears to have no significant influence on the ionic conductivity. Materials having an Al content of y = 0.2 have a lower ionic conductivity than the corresponding materials having the same Cl content but an Al content of y = 0.1.

Direct-current (DC) polarization curves at applied voltages of 0.25 V, 0.5 V and 0.75 V were recorded using the same cell configuration as applied for EIS for 15 to 20 minutes at each voltage at room temperature to determine the electronic conductivities of samples. The electronic conductivity was found to be $10^{-9}$ S*cm$^{-1}$ or lower.

### 3. Structural analysis

### 3.1 Methods

The XRD patterns were measured overnight on an Empyrean X-ray diffractometer (PANalytical) with Cu k$\alpha$ radiation (1.5406 Å) while the samples were protected from air and moisture. The applied voltage and current were 45 kV and 40 mA, respectively, and the measurement range was 10 to 80 degrees. Patterns were recorded in Debye-Scherrer geometry, and HighScore Plus software was used to identify the peaks.

Raman spectra were collected on the pelletized samples using a Raman HORIBA HR800 spectrometer at an excitation of 514 nm. Prior to Raman measurements, all the samples were placed between two glass slides and sealed with epoxy in the glovebox.

Time-of-flight (TOF) neutron powder diffraction (NPD) data were collected at ambient temperature on POWGEN using 1.5 g of sample sealed in a vanadium can at the Spallation Neutron Source at the Oak Ridge National Laboratory (center $\lambda$: 1.5 Å, d-spacing over the range of 0.50097 - 13.0087 Å).

High-field, fast magic-angle-spinning (MAS) NMR was performed with a 1.9 mm probe on a Bruker 850 MHz HD spectrometer in a zirconia rotor, with $^7$Li possessing a 330 MHz Larmor frequency at the 20 T field strength. A 30 kHz MAS rate was employed for all samples, and a 3.5 $\mu$s, 110 W excitation pulse generated the spectra. $^7$Li referencing was nominally to 1M LiCl (aq), but it was found with previous studies (P. Adeli, J. D. Bazak, K. H. Park, I. Kochetkov, A. Huq, G. R. Goward, L. F. Nazar, Angew. Chem. Int. Ed. 2019, 58, 8681; Angew.Chem. 2019, 131, 8773) that internally referencing to trace LiCl (s) impurity stemming from the argyrodite samples themselves was more reliable, absent a lock for the 1.9 mm probe and with the 850 MHz HD spectrometer being a pumped magnet system. To avoid saturation of this small LiCl (s) impurity signal, a 60 s recycle delay was utilized, with an 8-step phase cycle to remove any residual transmitter artifacts. Under static conditions at 7 T on a Bruker Avance III 300WB spectrometer (*vide infra,* PFG-NMR methods), the spectra are already motionally narrowed and exhibit no satellite transitions, at all of the temperatures investigated, therefore the quadrupolar coupling for these materials is insufficient to generate a 2$^{nd}$-order quadrupole shift of the order of shift observed in the MAS spectra.

2D exchange spectroscopy (EXSY) was also performed for $^7$Li for certain materials (see below) which exhibited a secondary signal. A 12 ppm spectral width in the indirect dimension digitized with 650 points was used to acquire the 2D EXSY spectra, with a 4.5 s recycle delay and an 8-step phase cycle (using States-TPPI as the acquisition mode in the indirect dimension), which resulted in an approximately 7-hour experiment time (depending on mixing time) and was sufficient to eliminate any ringing in the indirect dimension. Mixing times ranged from 10 $\mu$s to 500 ms, but owing to the imbalance in spectral volumes between the primary and secondary signals, and the long tails of the primary signal, volumetric deconvolution of the cross-peaks was not reliable. Consequently, the results are only interpreted qualitatively to demonstrate that the secondary signal is in exchange with the primary signal Additionally, the secondary signals in the one-dimensional $^7$Li MAS spectra were deconvo-luted using ssNake v1.0 (S. G. J. van Meerten, W. M. J. Franssen, A. P. M. Kentgens, J. Magn. Reson. 2019, 301, 56-66). Lorentzian lineshapes were used to fit both the primary and secondary peaks, but the primary peak was fit in isolation first and then the secondary peak was fit using the same line-broadening as determined for the first peak composition, a second Lorentzian was added and fit in conjunction with the primary Lorentzian to account for the full primary peak).

Fast MAS NMER for $^{31}$P was also conducted for certain samples, using a 1.9 mm zirconia rotor with 30 kHz MAS rate on the Bruker 850 MHz HD spectrometer ($^{31}$P Larmor frequency of 343 MHz). A 6 $\mu$s excitation pulse at 80 W was used to observe the resonance, and a 60-second recycle delay was employed to avoid saturating the signal, established using inversion recovery experiments. A total of 64 scans were accumulated to achieve reasonable signal-to-noise, and signals were referenced to 85% $H_3PO_4$ in a capillary standard.

Diffusion measurements were conducted using the pulsed-field gradient (PFG) NMR technique ($^7$Li Pulsed-Field Gradient NMR Spectroscopy), with a Bruker Avance III 300 MHz spectrometer (7.0 T; $^7$Li has a Larmor frequency of 117 MHz at this field strength) and a Diff50 gradient probe with a 5 mm $^7$Li coil insert. Samples were placed in a Shigemi tube with a packing depth of 3-4 mm in an Ar-filled glovebox, and the tube was sealed with parafilm. The sample plug in the Shigemi tube was aligned with the centre of the gradient coil using a standard $^7$Li frequency-encoding MRI. Temperature control was achieved with a BCU II gas chiller unit, over a targeted range of 268.2 K to 343.2 K. To determine the actual sample temperature, a $\delta$ $^1$H shift thermometer calibration curve was developed for the same chiller gas settings as employed in the diffusion experiments using equivalent amounts of methanol (268.2 K to 303.2 In and ethylene glycol (298.2 K to 343.2 K), and standard Bruker shift-difference parameters. It was also verified that gradient-related heating of the sample was negligible by repeating the chemical shift measurements immediately after transmitting the solid-state PFG experiment to the shift thermometer samples with the RF pulses blanked. Additionally, the temperature calibration takes into account the effect of only operating the water cooling bath for the gradient coils within the range of 283 K to 313 K (for thermal stability of the output). While performing variable-temperature PFG NMR experiments, temperatures were shifted in 10 K increments until the upper temperature range was reached, with 20 minutes of equilibration prior to commencing the experiment once the target temperature was achieved, and then cooled again in 10 K increments with a 5 K offset, to verify that there was no hysteresis in the data set (i.e. incomplete thermal equilibration). For the pellet and powder versions of $Li_{5.35}Ca_{0.1}PS_{4.5}Cl_{1.55}$ samples (see section 5 below) samples, the nominal temperature range was 243.2 K to 358.2 K, with the methanol and ethylene glycol shift thermometers extended accordingly. The pellet was cold-pressed at 2 tons of applied pressure in a 10 mm dye to an approximate thickness of 2 mm, and was sliced into smaller sections with a dried spatula in an Ar-filled glovebox. The resulting sections were then carefully stacked in the Shigemi tube to retain a roughly cylindrical sample geometry.

A bipolar pulse pair, stimulated echo (BPP-STE), longitudinal eddy-current delay (LED) pulsed field gradient (PFG) experiment (D. H. Wu, A. D. Chen, C. S. Johnson, J. Magn. Reson. Ser. A 1995, 115 (2), 260-264) was used to measure signal attenuation due to diffusion in the sample plug. By dividing the total magnitude of the gradient pulse into two halves, of opposite sign and either side of a $\pi$-pulse, large-amplitude gradient pulses can be supplied with eddy current ringdown largely cancelled (W. S. Price, NMR Studies of Translational Motion; 2009). Signal attenuation for a given diffusion rate is experimentally parameterized by the gradient magnitude g, the gradient duration $\delta$, and the diffusion time $\Delta$. The gradient encoding occurs on the transverse plane, so $\delta$ is ultimately limited by $T_2$, whereas in a STE PFG experiment, $\Delta$ occurs during a period of magnetization z-storage, and is therefore limited by $T_1$. $T_1$ is the spin-lattice relaxation time, and $T_2$ is the spin-spin relaxation time. For the materials wherein M = Ca, $T_1$ ranges from 111 to 138 ms, while $T_2$ is roughly an order of magnitude smaller, in the 10 to 20 ms range. Inversion recovery with a 3-second recycle delay was used to measure $T_1$, while $T_2$ was measured using CPMG with a 2 ms total echo delay. Accordingly, $\delta$ = 2.4 ms was chosen for the gradient duration, and $\Delta$ = 30 ms was used for the diffusion time (although at the coldest temperatures, for the slowest-diffusing phases, when the gradient strength was maximized, $\Delta$ was extended to maintain suitable attenuation). A 16-step gradient ramp ranging up to 2725 G/cm (or 99% of the probe capacity) was the primary variable for tracing out the signal attenuation at each temperature, with the ramp maximum set such that the last several points in the ramp achieved attenuation greater than 5% of the initial value, which enabled reliable fitting to the Stejskal-Tanner attenuation equation (E. O. Stejskal, J. E. Tanner, J. Chem. Phys. 1965, 42 (1), 288-292), with the necessary modifications for BPP-type experiments. The linearity of the gradient response - and therefore, the matching of the positive and negative gradients - was confirmed by repeating some experiments with g halved and $\delta$ commensurately increased, to maintain a fixed $b = \gamma^2 g^2 \delta^2 (\Delta - \delta/3 - \tau/2)$ value (with ras the delay between the gradient and RF pulses; $\gamma$ is the nuclear gyromagnetic ratio). A recycle delay of 3.5 s, while significantly greaterthan 5 $T_1$, was imposed by the recommended duty cycle of the gradient coil. Additionally, a 143 G/cm, 2 ms spoiler gradient was applied during the z-storage diffusion time and the 5 ms LED time, in order to remove any residual transverse magnetization and permit a 16-step phase cycle per gradient step, which yielded ample SNR to perform the fitting.

### 3.2 Materials wherein M is Ca

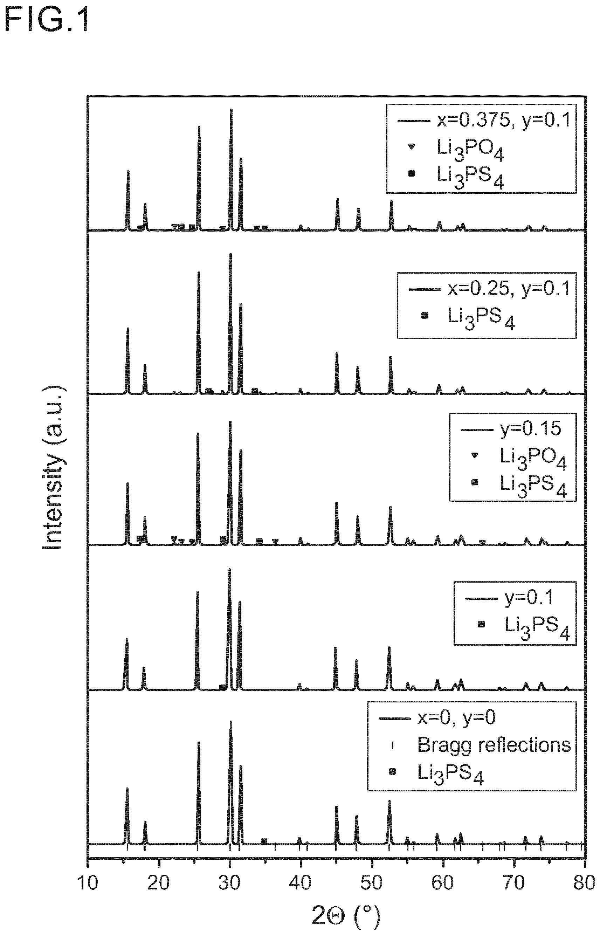

The XRD patterns for several solid materials of formula $Li_{6+2*-n-x-2*-y}Ca_yPS_{5+n-x}Cl_{1+x}$ and of comparison material $Li_6PS_5Cl$ are shown in figures 1 to 4.

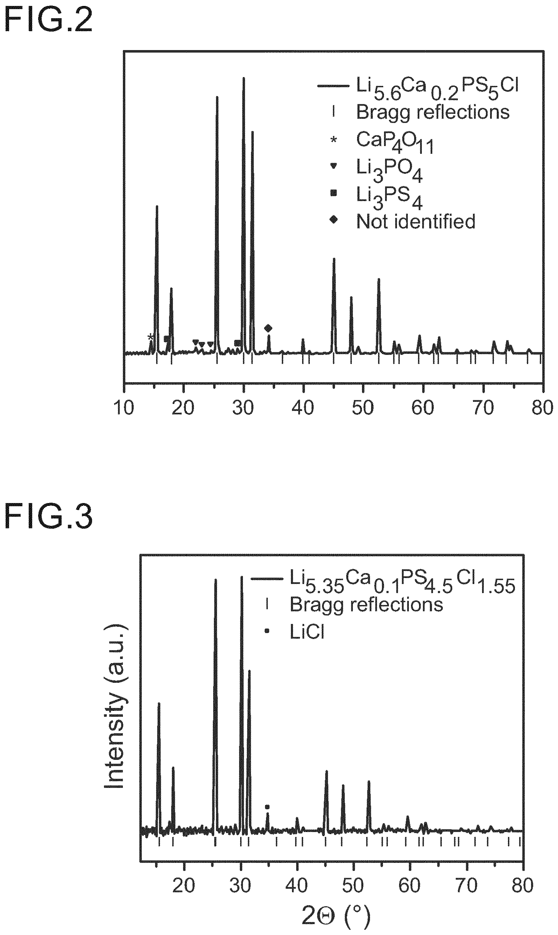

Figure 1 shows XRD (capillary) patterns of several materials having a composition according to formula $Li_{6-x-2y}Ca_yPS_{5-x}Cl_{1+x}$ (x = 0 with y = 0, 0.1, 0.15; x = 0.25, y = 0.1; x = 0.375, y = 0.1) representing the identified impurities. Vertical tick marks represent the calculated positions of the Bragg reflections for $Li_6PS_5Cl$ (x = 0, y = 0). The materials wherein x = 0 show a very small fraction of impurities (< 2 wt%) which are not likely to impact the ionic conductivity. Efforts to synthesize a material wherein x = 0 and y = 0.2 led to the rise of $Li_3PS_4$ and $CaP_4O_{11}$ impurities (see figure 2 showing the XRD pattern of $Li_{5.6}Ca_{0.2}PS_5Cl$ with impurity peaks marked) and a decrease in the ionic conductivity, indicating that when x = 0 a limit of solid solubility may exist between y = 0.15 and y = 0.2.

For $Li_{5.35}Ca_{0.1}PS_{4.5}Cl_{1.55}$ a small amount of LiCl impurity was observed (see figure 3 showing the XRD pattern of $Li_{5.35}Ca_{0.1}PS_{4.5}Cl_{1.55}$ with the LiCl impurity peak marked). Vertical tick marks represent the calculated positions of the Bragg reflections.

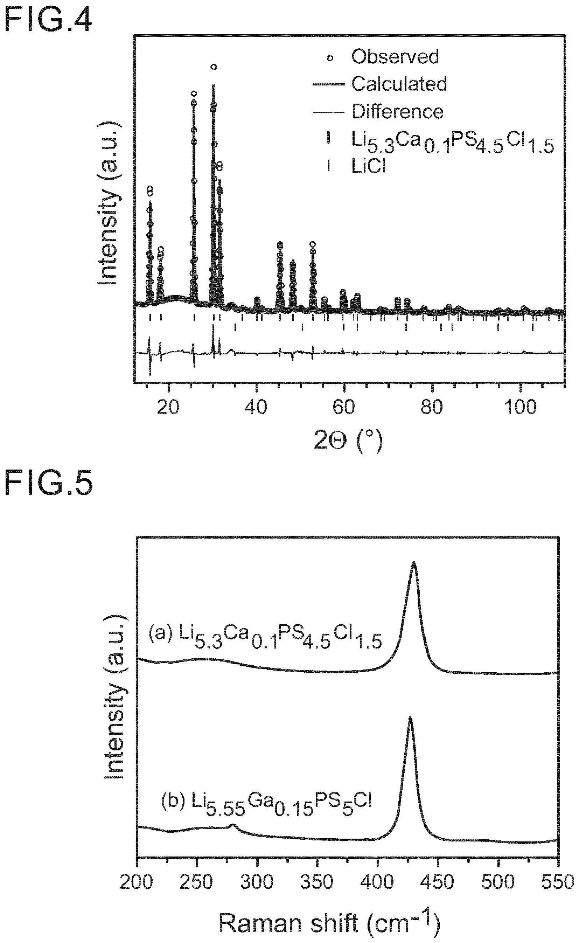

The materials having a composition according to formula $Li_{6-x-2y}Ca_yPS_{5-x}Cl_{1+x}$ (x = 0.25, y = 0.1; x = 0.375, y = 0.1; x = 0.5, y = 0.1) are almost pure single phases (impurities < 1.5 wt%), see the corresponding XRD patterns in figure 1 resp. in figure 4 (showing a Rietveld refinement of the XRD pattern of $Li_{5.3}Ca_{0.1}PS_{4.5}Cl_{1.5}$, GOF = 1.51, Rwp = 8.88, wherein GOF = goodness of fit; Rwp = R factor for weighted profile). In figure 4, circular markers correspond to the observed data points and a line shows the fit of the data points and the line close to the bottom is the difference map, the vertical tick marks in the upper row represent the calculated positions of the Bragg reflections of $Li_{5.3}Ca_{0.1}PS_{4.5}Cl_{1.5}$, and the vertical tick marks in the lower row represent the calculated positions of the Bragg reflections of LiCl.

The local structure of $Li_{5.3}Ca_{0.1}PS_{4.5}Cl_{1.5}$ was explored with Raman spectroscopy, showing only the $PS_4^{3-}$ moiety characteristic of the crystalline structure with no evidence of $P_2S_6$ (cf. figure 5(a) showing the Raman spectrum of $Li_{5.3}Ca_{0.1}PS_{4.5}Cl_{1.5}$ with identified $PS_4$ moiety at 422 cm$^{-1}$). The EDX (for experimental details see below) analysis for $Li_{5.3}Ca_{0.1}PS_{4.5}Cl_{1.5}$ yielded a Ca:P:Cl ratio of 0.10:1.00:1.48.

Further increase of the Ca content corresponding to a targeted composition (gross composition) $Li_{5.45}Ca_{0.15}PS_{4.75}Cl_{1.25}$ led to the formation of a notable amount of secondary phases, which had an undesirable impact on the ionic conductivity. Apparently, the Cl-enriched argyrodites cannot sustain as high a degree of Ca substitution likely owing to the vacancy limitations on the 48h site.

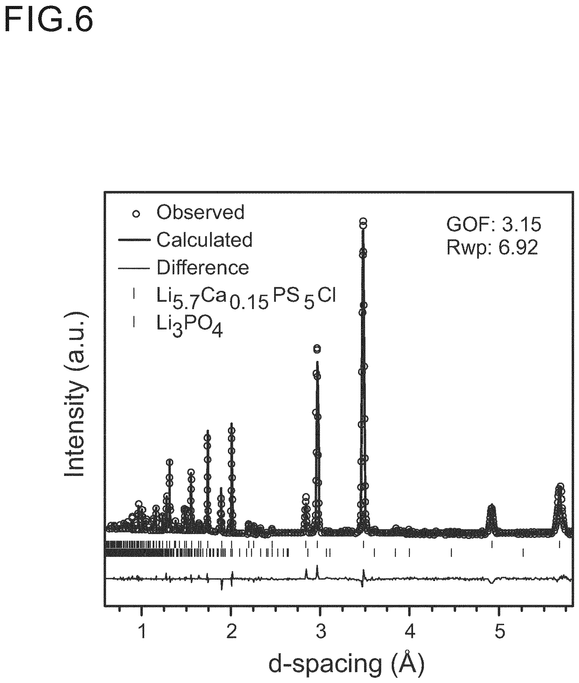

In order to get a better understanding of the structural influence of the presence of $Ca^{2+}$ cations, Rietveld refinement against the time of flight (TOF) neutron diffraction pattern of $Li_{5.7}Ca_{0.15}PS_5Cl$ (figure 6) was carried out in the cubic space group $F\overline{4}3m$. In figure 6, circular markers correspond to the observed data points and a line shows the fit of the data points; the line close to the bottom is the difference map, the vertical tick marks in the upper row refer to $Li_{5.7}Ca_{0.15}PS_5Cl$, and the vertical tick marks in the lower row refer to $Li_3PO_4$.

The occupancies on the 4b and 16e sites were fixed at their stoichiometric values. The atomic coordinates and atomic displacement parameters ($U_{iso}$) were fixed to be the same for the shared sites S1 and Cl1 and for S2 and Cl2. The sum of occupancies was fixed at one for the shared sites (Occ(S1)+Occ(Cl1)=1 and Occ(S2)+Occ(Cl2)=1), and the atomic coordinates were fixed to be the same for Li and Ca on the 48h site. Because of the low Ca concentration, the $U_{iso}$ for Ca (0.05 Å$^2$) was fixed to be smaller than that of Li, assuming that a divalent cation will have a smaller atomic displacement parameter on the same site, due to its divalent nature and larger size. All parameters were subsequently refined. For both NPD refinements (Table 3 and Table 4), this assumption gave reasonable occupancy values that were in accordance with the targeted stoichiometry and EDX analysis (see below). Performing the refinement without fixing the $U_{iso}$ for $Ca^{2+}$ or with smaller fixed $U_{iso}$ values, which was reported for $Ca^{2+}$ substitution in other cubic thiophosphates, e.g. 0.04 Å$^2$, cf. C. K. Moon, H.-J. Lee, K. H. Park, H. Kwak, J. W. Heo, K. Choi, H. Yang, M.-S. Kim, S.-T. Hong, J. H. Lee, Y. S. Jung, ACS Energy Lett. 2018, 3, 2504), did not yield meaningful occupancies. The refinement results (Table 3) reveal that $Li^+$ and $Ca^{2+}$ ions both occupy the 48h site and neither are present on the 24g site in the argyrodite structure. The composition determined from the refinement is $Li_{5.71}Ca_{0.15}PS_{4.95}Cl$, which is very close to the targeted stoichiometry $Li_{5.7}Ca_{0.15}PS_5Cl$. The site disorder (ratio of $Cl^-/S^{2-}$ on the 4c site) is almost the same as in the parent phase $Li_6PS_5Cl$. The large atomic displacement parameter $U_{iso}$ (0.084 Å$^2$) refined for the 48h site is indicative of a fairly mobile Li ion at that position.

Table 3. Atomic coordinates, occupation factor and isotropic displacement parameters of target composition $Li_{5.7}Ca_{0.15}PS_5Cl$ obtained from Rietveld refinement of neutron time of flight data (space group $F\overline{4}3m$, a = 9.8414 (1) Å, and volume = 953.20 (2) Å$^3$) yielding a refined composition of $Li_{5.71}Ca_{0.15}PS_{4.95}Cl$.

| Atom | Wyckoff Site | x | y | z | SOF | $U_{iso}$(Å$^2$) |
|---|---|---|---|---|---|---|
| Li | 48h | 0.3116 | 0.0234 | 0.6885 | 0.476(14) | 0.084(4) |
| Ca | 48h | 0.3116 | 0.0234 | 0.6885 | 0.0125(30) | 0.05 |
| Cl1 | 4a | 0 | 0 | 0 | 0.420(9) | 0.024(1) |
| Cl2 | 4c | 1/4 | 1/4 | 1/4 | 0.628(11) | 0.033(1) |
| P1 | 4b | 0 | 0 | 0.5 | 1 | 0.025(1) |
| S1 | 4a | 0 | 0 | 0 | 0.580(9) | 0.024(1) |
| S2 | 4c | 1/4 | 1/4 | 1/4 | 0.372(11) | 0.033(1) |
| S3 | 16e | 0.1189 | -0.1189 | 0.6189 | 1 | 0.040(1) |

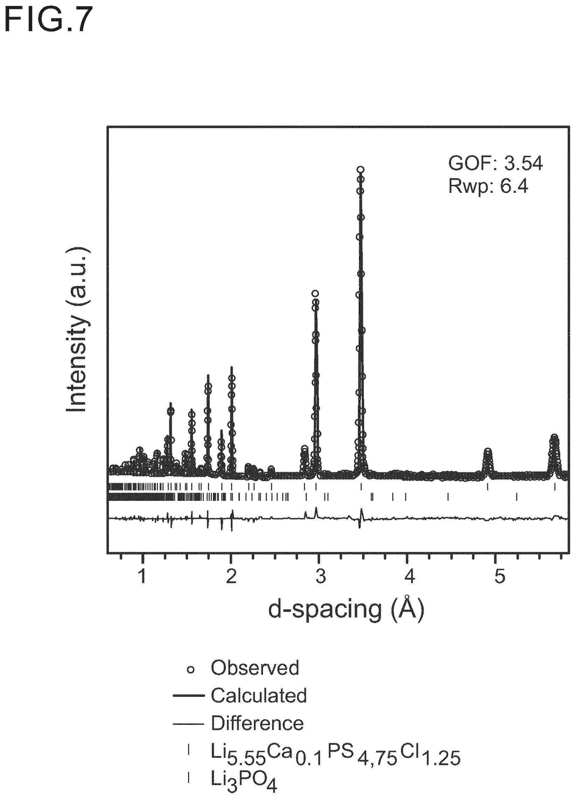

Rietveld refinement against the time of flight (TOF) neutron diffraction pattern of $Li_{5.55}Ca_{0.1}PS_{4.75}Cl_{1.25}$ (Figure 7) was carried out, where the $U_{iso}$ values for Li and Ca on the 48h site were fixed, and the total occupancy on the 48h site was confined. All the parameters were subsequently refined. In figure 7, circular markers correspond to the observed data points and a line shows the fit of the data points; the line close to the bottom is the difference map, the vertical tick marks in the upper row refer to $Li_{5.55}Ca_{0.1}PS_{4.75}Cl_{1.25}$ and the vertical tick marks in the lower to $Li_3PO_4$. The results of the Rietveld refinement are presented in Table 4 and show a refined composition of $Li_{5.56}Ca_{0.10}PS_{4.73}Cl_{1.27}$ that is very close to the targeted stoichiometry $Li_{5.55}Ca_{0.1}PS_{4.75}Cl_{1.25}$. The site disorder increases to 74%, compared to 61% for $Li_6PS_5Cl$.

Table 4. Atomic coordinates, occupation factor and isotropic displacement parameters of target composition $Li_{5.55}Ca_{0.1}PS_{4.75}Cl_{1.25}$ obtained from Rietveld refinement of neutron time of flight data (space group $F\bar{4}3m$, a = 9.8222 (1) Å, and volume = 947.59(2) Å³) yielding a refined composition of $Li_{5.56}Ca_{0.10}PS_{4.73}Cl_{1.27}$

| Atom | Wyckoff Site | x | y | z | SOF | $U_{iso}$(Å²) |
|---|---|---|---|---|---|---|
| Li | 48*h* | 0.3143(15) | 0.0212(9) | 0.6858(15) | 0.463(3) | 0.075 |
| Ca | 48*h* | 0.3143(15) | 0.0212(9) | 0.6858(15) | 0.008(3) | 0.05 |
| Cl1 | 4*a* | 0 | 0 | 0 | 0.536(15) | 0.028(1) |
| Cl2 | 4*c* | 1/4 | 1/4 | 1/4 | 0.738(15) | 0.033(1) |
| P1 | 4*b* | 0 | 0 | 0.5 | 1 | 0.030(1) |
| S1 | 4*a* | 0 | 0 | 0 | 0.464(15) | 0.028(1) |
| S2 | 4*c* | 1/4 | 1/4 | 1/4 | 0.262(15) | 0.033(1) |
| S3 | 16*e* | 0.120 | -0.120 | 0.620 | 1 | 0.049(1) |

For $Li_{5.3}Ca_{0.1}PS_{4.5}Cl_{1.5}$, Rietveld refinement (see table 5 and figure 4) was carried out against X-ray diffraction data (space group $F\bar{4}3m$) using a = 9.8132(1) Å, and volume = 945.02(4) Å³. Since X-rays are not able to resolve the Li occupancy, the occupancies for the 48h site were fixed to the nominal values and occupancies for the 4a site were fixed to the values obtained from NDP of $Li_{5.5}PS_{4.5}Cl_{1.5}$.

Table 5. Atomic coordinates, occupation factor and isotropic displacement parameters of the targeted stoichiometry $Li_{5.3}Ca_{0.1}PS_{4.5}Cl_{1.5}$ obtained from Rietveld refinement against X-ray diffraction data (space group $F\bar{4}3m$, a = 9.8132 (1) Å, and volume = 945.02(4) Å³).

| Atom | Wyckoff Site | X | y | z | SOF | $U_{iso}$(Å²) |
|---|---|---|---|---|---|---|
| Li | 48*h* | 0.329(1) | -0.001 (2) | 0.671 (1) | 0.440 | 0.114(9) |
| Ca | 48*h* | 0.329(1) | -0.001(2) | 0.671(1) | 0.010 | 0.114(9) |
| Cl1 | 4*a* | 0 | 0 | 0 | 0.615 | 0.043(2) |
| S1 | 4*a* | 0 | 0 | 0 | 0.385 | 0.043(2) |
| Cl2 | 4*c* | 1/4 | 1/4 | 1/4 | 0.83(12) | 0.040(2) |
| S2 | 4*c* | 1/4 | 1/4 | 1/4 | 0.17(12) | 0.040(2) |
| P1 | 4*b* | 0 | 0 | 0.5 | 1 | 0.038(1) |
| S3 | 16*e* | 0.1211(2) | -0.1211(2) | 0.6211(2) | 1 | 0.063 |

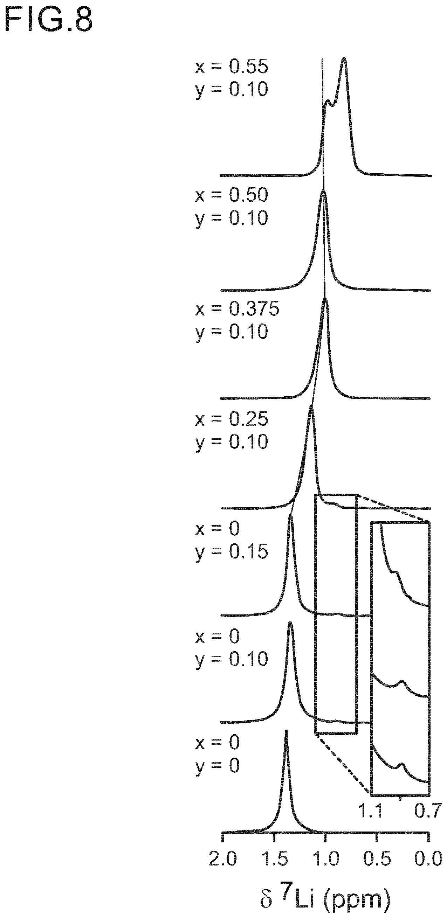

Along with the NPD studies, the presence of $Ca^{2+}$ in the vicinity of $Li^+$ was also established by the appearance of a small secondary peak in the $^7Li$ MAS NMR measurements for several $Ca^{2+}$-containing compositions along with the expected main resonance. Figure 8 shows stack plots of $^7Li$ MAS spectra which demonstrate a strong trend of the chemical shift with increasing chlorine content, while no major change in chemical shift is associated with $Ca^{2+}$ doping when x = 0. The inset in figure 8 reveals the secondary peak associated with the modification of the local electronic environment of a subset of the Li ions by the presence of $Ca^{2+}$. Deconvolution of the lineshapes for $Li_{5.8}Ca_{0.1}PS_5Cl$, $Li_{5.7}Ca_{0.15}PS_5Cl$ and $Li_{5.55}Ca_{0.1}PS_{4.75}Cl_{1.25}$ for which the secondary peak was not obscured by the larger chemical shift trend caused by increasing chlorine content yielded peak areas with ratios corresponding to the $Li^+/Ca^{2+}$ stoichiometric ratio in each case. The secondary peak in the $^7Li$ MAS NMR spectrum for $Li_{5.55}Ca_{0.1}PS_{4.75}Cl_{1.25}$ is closer to the main resonance than it is for $Li_{5.8}Cao_{0.1}PS_5Cl$ and $Li_{5.7}Ca_{0.15}PS_5Cl$, indicating a greater degree of averaging of the signals on the NMR timescale.

Additionally, $^7Li$ 2D exchange spectroscopy (EXSY), while not quantitative in this case owing to the difficulty in deconvoluting overlapping spectral volumes, indicates that lithium species generating these secondary peaks are in close proximity to those producing the primary peaks - that is, within the same phase, and not due to a contaminant impurity. This is because the cross peaks in an EXSY experiment can only form directly via chemical exchange or because of (short-range) homonuclear dipolar coupling (i.e. spin diffusion). The cross peaks in these EXSY spectra (not shown) indicate that the Li ions corresponding to the two peaks are more than likely undergoing chemical exchange given the short mixing times involved.

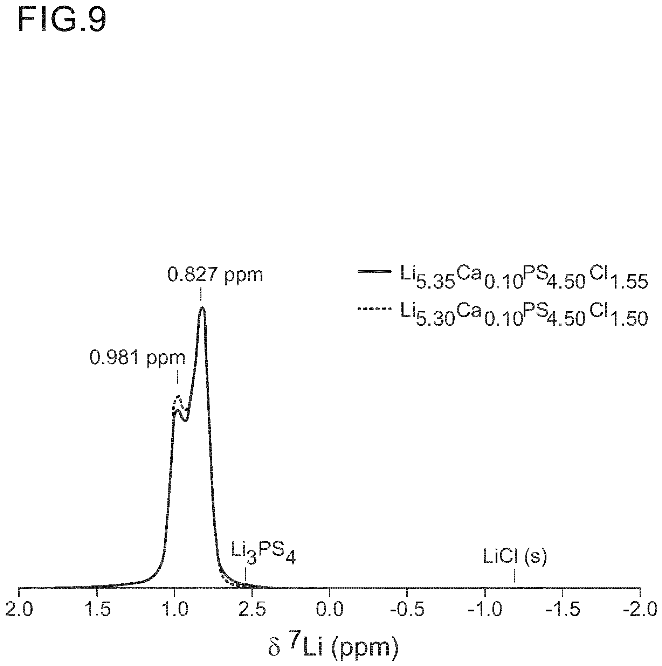

Different from the $^7$Li MAS spectrum shown in Figure 8, certain samples having the targeted composition (gross composition) $Li_{5.3}Ca_{0.1}PS_{4.5}Cl_{1.5}$ exhibited more than one main peak in the $^7$Li MAS NMR spectrum, although there was no indication of more than one main phase in the XRD pattern. When x is increased further (target composition $Li_{5.35}Ca_{0.1}PS_{4.5}Cl_{1.55}$) likely a mixture comprising the phase $Li_{5.3}Ca_{0.1}PS_{4.5}Cl_{1.5}$ and another phase containing nanodomains where x > 0.5 results. This is evidenced by the $^7$Li MAS NMR spectrum for the material having the target composition (gross composition) $Li_{5.35}Ca_{0.1}PS_{4.5}Cl_{1.55}$, which exhibits a peak at 0.98 ppm consistent with x = 0.5 and an additional peak further shifted towards a more "LiCl-like" environment at 0.83 ppm. Figure 9 shows the $^7$Li MAS NMR spectrum for $Li_{5.35}Ca_{0.1}PS_{4.5}Cl_{1.55}$ at 20 °C, 850 MHz field strength and 30 kHz MAS rate. The resonance at 0.98 ppm is consistent with x = 0.5, as determined in a prior study W. S. Price, NMR Studies of Translational Motion; 2009) and consistent with the minimal modification of the chemical shift caused by $Ca^{2+}$ relative to the significant modification of the chemical shift caused by $Cl^-$ when x > 0 (see figure 8), while the resonance at 0.83 ppm appears to be a much more halide-rich environment as per the established trend of the chemical shift by increased $Cl^-$ substitution. The shown example of a sample having the target composition (gross composition) $Li_{5.3}Ca_{0.1}PS_{4.5}Cl_{1.5}$ also exhibits the presence of two phases as it is the case for $Li_{5.35}Ca_{0.1}PS_{4.5}Cl_{1.55}$. There is negligible (< 0.5% of integrated signal intensity) LiCl (s) in both samples.

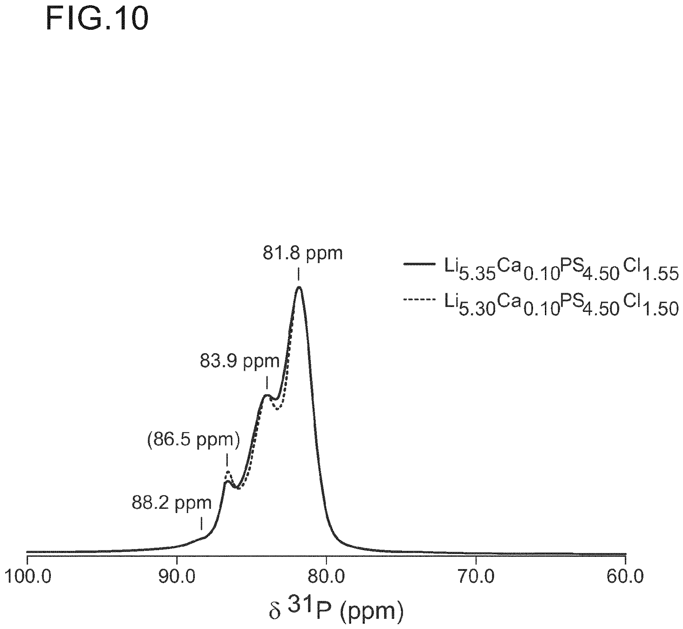

The $^{31}$P MAS NMR of a sample having the target composition $Li_{5.35}Ca_{0.1}PS_{4.5}Cl_{1.55}$ exhibits a series of shifts with cascading intensities, indicative of progressively higher amounts of Cl- substitution in the surrounding anion shells. Figure 10 shows the $^{31}$P MAS NMR spectrum for $Li_{5.35}Ca_{0.1}PS_{4.5}Cl_{1.55}$ at 20°C, 850 MHz field strength and 30 kHz MAS rate. The cascading pattern of nearly evenly-spaced resonances is indicative of a distribution of phosphorus environments with progressively increasing Cl- substitution in the surrounding anion shells. The resonance at 86.5 ppm is indicative of isolated $[PS_4]^{3-}$ tetrahedral moiety, and overlays the chemical shift distribution pattern (with the peak in this region expected, from the remainder of the pattern, to appear at ~86 ppm). It potentially arises from a small amount of $Li_3PS_4$-like impurity, which would appear in the tail of the $^7$Li MAS spectrum at 0.5-0.6 ppm (see figure 9). Said $Li_3PS_4$-like impurity is also present in in the sample having the target composition (gross composition) provided $Li_{5.3}Ca_{0.1}PS_{4.5}Cl_{1.5}$ shown for comparison in figures 9 and 10.

### 3.3 Materials wherein M is Al or Ga

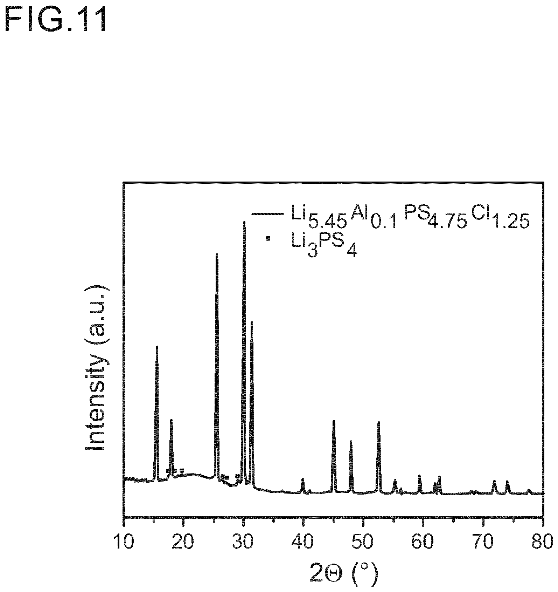

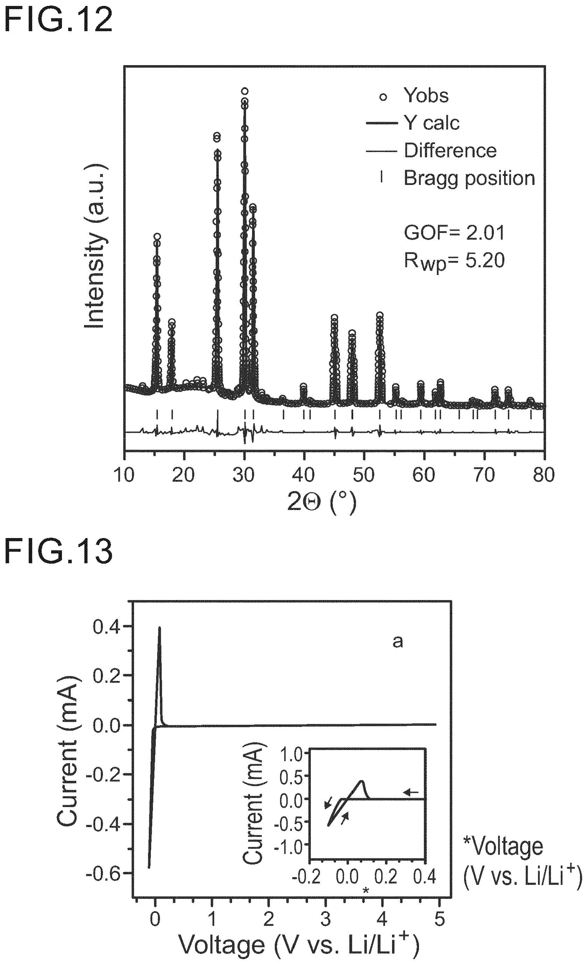

Owing to the smaller size of $Al^{3+}$ (0.535 Å) and $Ga^{3+}$ (0.620 Å) cations compared to $Li^+$ (0.76 Å), only small fractions of Al resp. Ga could be incorporated (y = 0.1) into the parent argyrodite structure $Li_6PS_5Cl$. An XRD pattern of $Li_{5.45}Al_{0.1}PS_{4.75}Cl_{1.25}$ is shown in figure 11 with the $Li_3PS_4$ impurity peaks marked. An XRD pattern of $Li_{5.7}Gao_{0.1}PS_5Cl$ with Rietveld refinement (a= 9.8374(1) Å) obtained from whole pattern fitting is shown in figure 12, where circular markers correspond to the observed data points; and a line shows the fit of the data points; and the line close to the bottom is the difference map. Vertical tick marks indicate the calculated Bragg positions.

The local structure of $Li_{5.55}Ga_{0.15}PS_5Cl$ was explored with Raman spectroscopy, showing only the $PS_4^{3-}$ moiety characteristic of the crystalline structure with no evidence of $P_2S_6$ (cf. figure 5(b) showing the Raman spectrum of $Li_{5.55}Gao_{0.15}PS_5Cl$ with identified $PS_4^{3-}$ moiety at 422 cm$^{-1}$).

Attempts to synthesize phase pure $Li_{6-3y}M_yPS_5Cl$ (M=Al resp. Ga) wherein y > 0.15 were unsuccessful and led to significant $Li_3PS_4$ and lithium thiogallate ($LiGaS_2$) impurities respectively.

### 4. Electrochemical tests

The cyclic voltammogram of an all-solid-state cell having the configuration
stainless steel (working electrode)|$Li_{5.8}Ca_{0.1}PS_5Cl$|Li(counter electrode)
is shown in figure 13. The scan rate was 1 mV s$^{-1}$. It is evident that $Li_{5.8}Cao_{0.1}PS_5Cl$ is stable against lithium metal within a broad potential window ranging from about 0.2 to 5 V vs Li/Li$^+$. The redox process in the voltage range below 0.2 V vs Li/Li$^{*+}$ (see inset in figure 4) is attributed to the oxidation/reduction (Stripping/plating) of Li.

### 5. Correlation between structure and ion conductivity

Without whishing to be bound by any theory, it is assumed that the presence of anion disorder and of unoccupied neighboring sites for the mobile ion hops leads to increased lithium ion conductivity. The site disorder arises because $Cl^-$ ions share two sites (4a and 4c) with $S^{2-}$ which alters the energy landscape for Li ion diffusion. For $Li_{6-2y}Ca_yPS_5Cl$, the stepwise introduction of Ca in the Li site is accompanied by a gradual increase in vacancy concentration which is the main contributor to the enhancement in the ion conductivity, given that the disorder is not significantly changed *vis a vis* $Li_6PS_5Cl$. The effect of $Ca^{2+}$ incorporation on the intracage or doublet jumps should be negligible at this small level of $Ca^{2+}$ doping (one Ca per ~ 10 and ~ 6 cages for y = 0.1, y = 0.15 respectively) as it is the long-range transport between the cages (intercage) which dictates the macroscopic conductivity in Li-argyrodites, as demonstrated by ab initio molecular dynamics simulations. These studies showed that the intercage jump rate has the lowest jump frequency of all and will hence limit macroscopic diffusion. In the case of $Li_6PS_5Cl$, the jump rates are 0.73, 17.78, and 21.58 (x$10^{10}$ s$^{-1}$) for intercage, intracage and doublet jumps, respectively [N. J. de Klerk, I. Ros̨on, M. Wagemaker, *Chem. Mater.* 2016, 28, 7955]. The fact that $Ca^{2+}$ does not disrupt transport is further supported by the activation energies of the $Ca^{2+}$-substituted materials with x = 0 (Table 1), which are effectively the same as $Li_6PS_5Cl$.

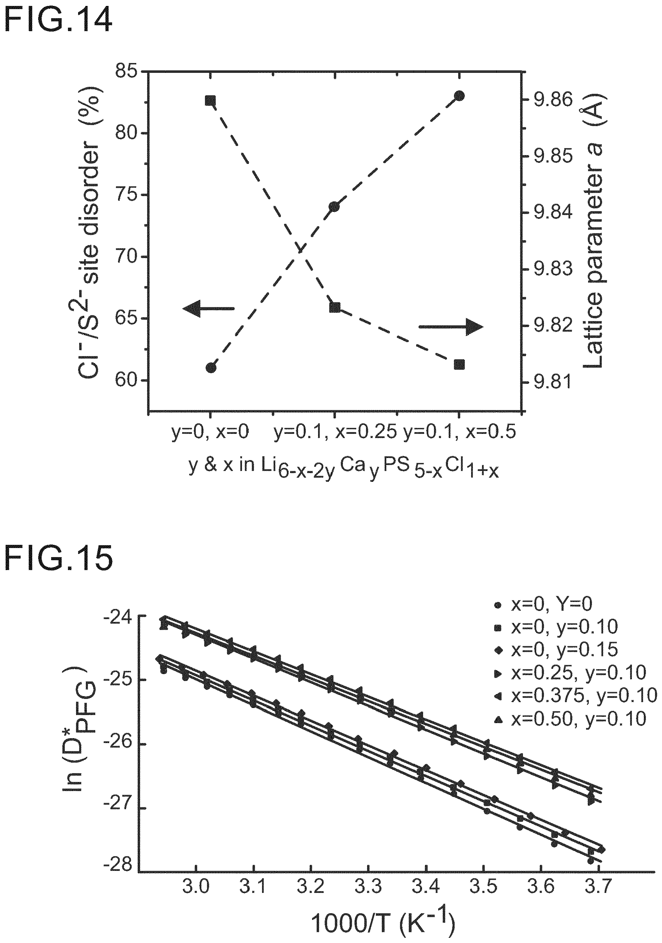

Introducing an aliovalent cation like $Ca^{2+}$ into the argyrodite parent $Li_6PS_5Cl$ structure creates Li vacancies and these generated vacancies increase the Li ion mobility and diffusivity as evident from impedance spectra recorded at different temperatures (not shown). Room temperature $Li^+$ diffusivities of $Li_{5.8}Ca_{0.1}PS_5Cl$ (y = 0.1) and $Li_{5.7}Ca_{0.15}PS_5Cl$ (y = 0.15), resp., are 4.15 *$10^{-12}$ m$^2$/s and 4.44*$10^{-12}$ m$^2$/s respectively, compared with 3.85*$10^{-12}$ m$^2$/s for $Li_6PS_5Cl$ (parent structure, y = 0), which reflects a respective 8% and 15% increase. $Li_{5.3}Ca_{0.1}PS_{4.5}Cl_{1.5}$ exhibits a high diffusivity of 9.1*$10^{-12}$ m$^2$/s, which is about 2.5 times that of the parent composition $Li_6PS_5Cl$, but lower than that of the Cl-enriched composition $Li_{5.5}PS_{4.5}Cl_{1.5}$ (P. Adeli, J. D. Bazak, K. H. Park, I. Kochetkov, A. Huq, G. R. Goward, L. F. Nazar, Angew. Chem. Int. Ed. 2019, 58, 8681; Angew. Chem. 2019,131, 8773). In contrast, $Li_{5.35}Ca_{0.1}PS_{4.5}Cl_{1.55}$ has remarkably high diffusivity of 1.21*$10^{-11}$ m$^2$/s which is 33% higher than the diffusivity of $Li_{5.3}Ca_{0.1}PS_{4.5}Cl_{1.5}$. Thus, in $Li_{6-x-2y}Ca_yPS_{5-x}Cl_{1+x}$, simultaneous substitution of $Li^+$ cation and $S^{2-}$ anion yields additional vacancies that contract the lattice to result in a progressive decrease in the intercage hop distance with the chlorine content, along with an increase in the site disorder (see figure 14 showing the site disorder $Cl^-/S^{2-}$ and the lattice parameter a vs. x and y for $Li_{6-x-2y}Ca_yPS_{5-x}Cl_{1+x}$). These factors, conjointly with the weakened electrostatic interactions between the mobile $Li^+$-ions and surrounding framework anions (induced by substitution of divalent $S^{2-}$ for monovalent $Cl^-$), apparently are key contributors to the high ionic conductivities for the compositions wherein x > 0 (Cl-enriched), similar to what was found for the Cl-enriched argyrodites derived from $Li_6PS_5Cl$ (P. Adeli, J. D. Bazak, K. H. Park, I. Kochetkov, A. Huq, G. R. Goward, L. F. Nazar, Angew. Chem. Int. Ed. 2019, 58, 8681; *Angew.Chem.*

For each composition wherein y > 0, the chemical shift was virtually identical to that of the Cl-enriched argyrodites derived from $Li_6PS_5Cl$ which do not contain a metal M as further substituent which were previously studied (P. Adeli, J. D. Bazak, K. H. Park, I. Kochetkov, A. Huq, G. R. Goward, L. F. Nazar, Angew. Chem. Int. Ed. 2019, 58, 8681; Angew.Chem. 2019,131, 8773). Combined with the relatively small $^7Li$ chemical shift of the materials having a composition according to formula $Li_{6-2y}Ca_yPS_5Cl$ (x = 0) relative to the parent material $Li_6PS_5Cl$ (see fig 8), this suggests that the $Ca^{2+}$ cations do not significantly modify the electronic environment of $Li^+$ within the cages where the $Ca^{2+}$ cations reside; their primary contribution to improving the transport is the introduction of excess vacancies to the $Li^+$ cage network.

Activation energy is a factor that governs ionic conductivity. For the materials wherein M is Ca, the lowest activation energy is exhibited by the material having the target composition $Li_{5.35}Ca_{0.1}PS_{4.5}Cl_{1.55}$ (0.30 eV, cf. table 1 above). Activation energy values obtained from $^7Li$ PFG-NMR are in good accord with the values obtained from impedance spectroscopy, as compared in Table 1. Figure 15 shows a comparison of PFG-NMR Arrhenius plots for the series of Ca-containing compositions with x = 0 and with x > 0. Even within the restricted temperature range 268 K - 343 K (from which the activation energies in Table 1 were calculated) there is still a slight curvature in the Arrhenius plots.

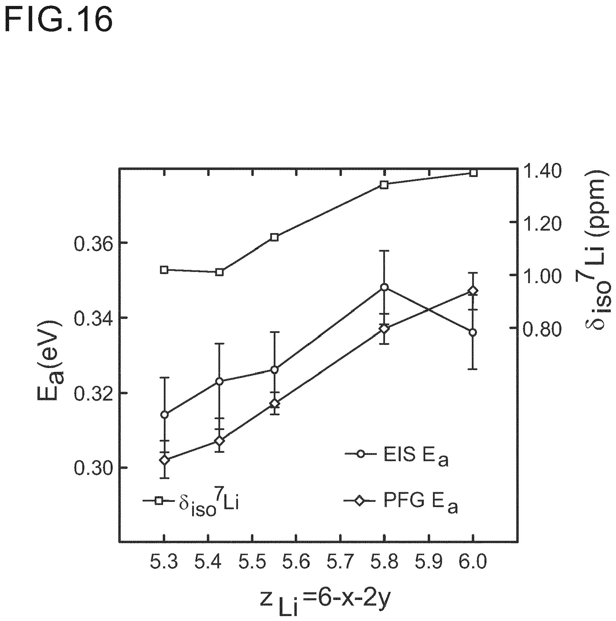

Figure 16 shows a correlation of activation energies from both electrochemical impedance spectroscopy (EIS) and PFG-NMR, as well as of the $^7Li$ isotropic chemical shift, with lithium stoichiometry $z_{Li}$ = 6 - x- 2y. Increasing x lowers the $^7Li$ chemical shift toward a more ionic, "LiCl-like" environment, but this effect eventually saturates, indicating that there is a limit to which disordering of $S^{2-}$ sites with $Cl^-$ can decrease $Li^+$ attraction to the anion framework.

The activation energy continues decreasing as x is increased, which stems from the impact of the additional vacancies on $Li^+$ sites. Conversely, the lack of a decrease of chemical shift when y changes from y = 0 to y = 0.1 opposes the associated activation energy drop, which can therefore be attributed strictly to the increased vacancy population. Figure 16 also demonstrates that the most significant lowering of the activation energy can be achieved by moderate $Cl^-$ enrichment with a small amount of $Ca^{2+}$ doping. The two effects act in concert to both lower the activation energy and boost the magnitudes of the conductivity and diffusivity to a greater amount than performing one or the other, when the solubility limit of the lattice with respect to either dopant ($Ca^{2+}$ and $Cl^-$) is not exceeded.

Ionic conductivities of the materials according to the first aspect described above resp. obtained by the process according to the second aspect described above can be further improved by hot pressing, cold-pressing or sintering the powder, so that the grain boundaries are modified. The effect of purely cold-pressing is discussed now in further detail.

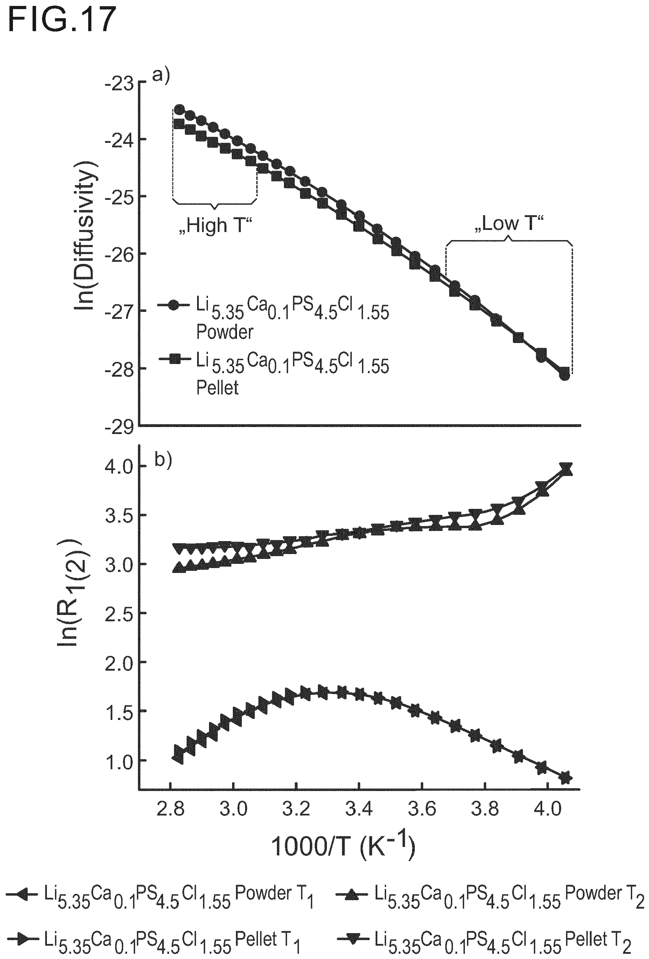

Further insight into the magnitude of the activation energy changes was obtained by performing $^7Li$ PFG-NMR on both a powder sample and a pressed pellet sample of the material having the target composition $Li_{5.35}Ca_{0.1}PS_{4.5}Cl_{1.55}$. Figure 17 shows a) a diffusivity Arrhenius plot from variable-temperature $^7Li$ PFG-NMR measurements on powder and pellet-pressed samples of $Li_{5.35}Ca_{0.1}PS_{4.5}Cl_{1.55}$ exhibiting non-ideal Arrhenius behaviour with a cross-over in slopes from low to high temperature which is significantly reduced in the pellet sample, and b) NMR relaxation rates of the powder and pellet samples. Regarding figure 17b), $T_1$ is the spin-lattice relaxation time, and $T_2$ is the spin-spin relaxation time. Two inflection points are present in the $T_2$ curves, indicating the presence of two distinct motional correlation times. Over the temperature range of 243 Kto 358 K, the Arrhenius plots exhibit non-ideal behaviour, with curvature appearing in the lower temperature region of this range.

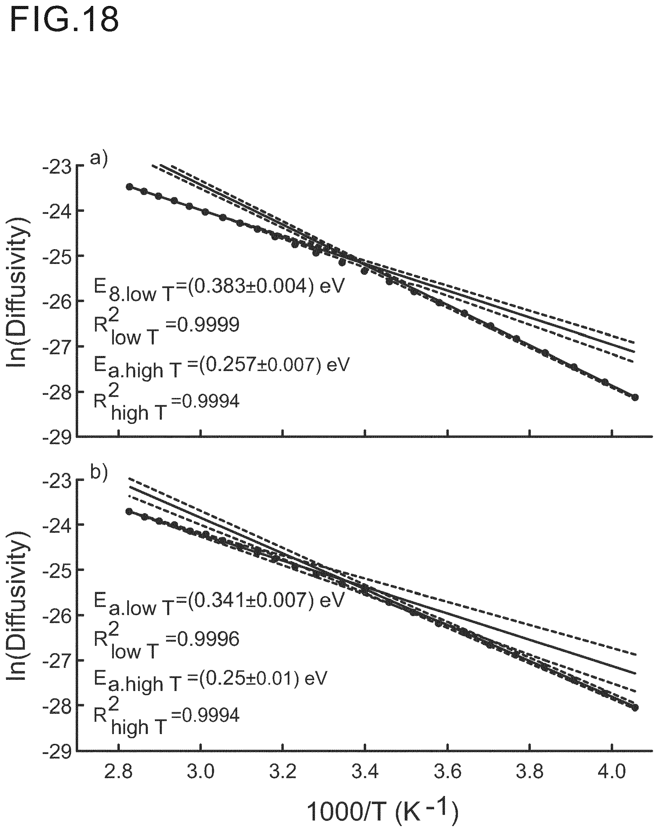

Figure 18 shows the two-component activation energy fits to the Arrhenius plots for the $^7$Li PFG NMR data for the powder (a) and pellet (b) versions of $Li_{5.35}Ca_{0.1}PS_{4.5}Cl_{1.55}$. The non-ideal Arrhenius behaviour appears to be indicative of competing grain contributions and grain-boundary contributions to the overall lithium-ion transport, with the latter having greater influence at lower temperature. The grain boundary influence is reduced by the compression of the sample into a pellet. The activation energy obtained by performing a two-component, limiting-slope fit of the PFG-NMR Arrhenius plots (Figure 17) is (0.257 ± 0.007) eV to (0.383 ± 0.004) eV for the powder sample of $Li_{5.35}Ca_{0.1}PS_{4.5}Cl_{1.55}$.

A conclusion from comparing the activation energies between the powder and pellet-pressed samples is that in the "high temperature" regime (as defined by the range of temperatures fit to the upper limiting slope) governed by the grain contribution, the Arrhenius slopes are essentially parallel. On the other hand, in the "low temperature" regime, there is a distinct reduction in slope between the pellet-pressed and powder samples, which can be attributed to a reduction in the difficulty of hops over grain dislocations in pelletized samples when the spatial extent of these gaps is presumably reduced by the macroscopic compression of the sample.

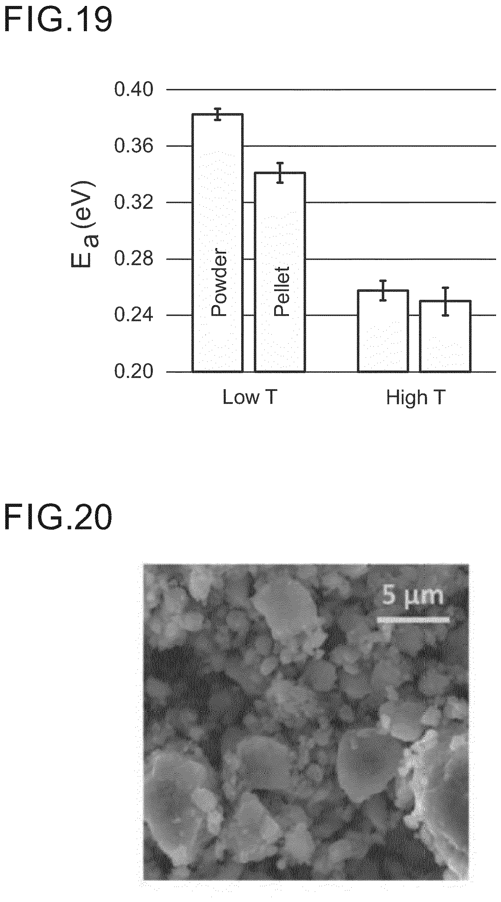

Figure 19 shows a comparison of powder and pellet activation energies in the "low-temperature"- and "high-temperature" regions of the $^7$Li PFG-NMR diffusivity Arrhenius plots from Figure 17a for the sample having the target composition $Li_{5.35}Ca_{0.1}PS_{4.5}Cl_{1.55}$. In the high temperature region, the activation energy of the powder and pellet samples does not differ significantly, and is associated with grain contributions. The compression to form the pellet enhances transport across grain dislocations in multi-crystallite particles, which is the source of the lower activation energy in the pellet sample for the low-temperature region, since the low temperature region is associated with grain boundary contributions.

For all-solid-state batteries employing thiophosphates, it is desirable to employ the electrolyte in the form of cold-pressed pellets so that a sintering treatment may be avoided. Hence it is important that a solid electrolyte exhibits high conductivity in the absence of sintering. The material $Li_{5.35}Ca_{0.1}PS_{4.5}Cl_{1.55}$ possesses a high room temperature ionic conductivity of 10.2 mS cm$^{-1}$ in the cold-pressed state with a low activation energy of 0.30 ± 0.01 eV and a very high diffusivity of $1.21 \times 10^{-11}$ m$^2$/s.

## 6. Scanning electron microscopy (SEM) and energy dispersive X-ray analysis (EDX)

Energy dispersive X-ray (EDX) analysis results provided elemental ratios that were in very good accord with the target values. A Zeiss Leo 1530 FESEM (with EDX detector) was utilized for microstructural observation of the samples as well as elemental analysis. As the materials were not stable under prolonged electron beam illumination, an acceleration voltage of 15 kV, with an acquisition time of 1 minute was used for EDX measurements. The results are given in tables 6 and 7 below.

Table 6. EDX analysis of $Li_{5.8}Ca_{0.1}PS_5Cl$, $Li_{5.7}Ca_{0.15}PS_5Cl$ and $Li_{5.3}Ca_{0.1}PS_{4.5}Cl_{1.5}$. Given the slight amount of hydrolysis that takes place during the material transfer into the SEM chamber, the sulfur content could not be accurately quantified. A minimum of 4 measurements per composition is reported.

| $Li_{5.8}Ca_{0.1}PS_5Cl$ | Atomic percent | | | Weight percent | | |
|---|---|---|---|---|---|---|
| Measurement | Ca | P | Cl | Ca | P | Cl |
| M1 | 1.79 | 16.01 | 17.70 | 2.20 | 15.20 | 19.23 |
| M2 | 1.83 | 16.02 | 18.04 | 2.25 | 15.20 | 19.59 |
| M3 | 1.67 | 17.38 | 15.42 | 2.06 | 16.55 | 16.81 |
| M4 | 1.89 | 17.10 | 16.47 | 2.33 | 16.25 | 17.91 |
| M5 | 1.60 | 17.87 | 15.84 | 1.97 | 17.01 | 17.26 |
| Average | 1.76 | 16.88 | 16.69 | 2.16 | 16.04 | 18.16 |
| Standard dev. | 0.11 | 0.74 | 1.15 | | | |
| **Normalized to Cl content** | **0.10** | **1.01** | **1.00** | | | |

(continued)

| Li$_{5.7}$Ca$_{0.15}$PS$_5$Cl | Atomic percent | | | Weight percent | | |
|---|---|---|---|---|---|---|
| Measurement | Ca | P | Cl | Ca | P | Cl |
| M1 | 3.14 | 16.09 | 18.30 | 3.84 | 15.21 | 19.80 |
| M2 | 3.12 | 15.45 | 18.26 | 3.82 | 14.60 | 19.76 |
| M3 | 2.15 | 17.48 | 15.09 | 2.64 | 16.63 | 16.43 |
| M4 | 2.49 | 16.28 | 14.63 | 3.07 | 15.48 | 15.92 |
| Average | 2.73 | 16.33 | 16.57 | 3.34 | 15.48 | 17.98 |
| Standard dev. | 0.42 | 0.73 | 1.70 | | | |
| **Normalized to Cl content** | **0.16** | **0.99** | **1.00** | | | |
| Li$_{5.3}$Ca$_{0.1}$PS$_{4.5}$Cl$_{1.5}$ | Atomic percent | | | Weight percent | | |
| Measurement | Ca | P | Cl | Ca | P | Cl |
| M1 | 1.26 | 15.39 | 21.55 | 1.55 | 14.56 | 23.35 |
| M2 | 1.52 | 15.61 | 22.27 | 1.87 | 14.75 | 24.10 |
| M3 | 1.52 | 14.2 | 23.72 | 1.86 | 13.40 | 25.61 |
| M4 | 1.6 | 15.13 | 22.62 | 1.96 | 14.29 | 24.45 |
| M5 | 1.45 | 15.53 | 22.27 | 1.78 | 14.68 | 24.10 |
| Average | 1.47 | 15.17 | 22.49 | 1.80 | 14.34 | 24.32 |
| Standard dev. | 0.01 | 0.26 | 0.5 | | | |
| **Normalized to P content** | **0.10** | **1.00** | **1.48** | | | |

Table 7: EDX analysis of the Li$_{5.7}$Gao$_{0.1}$PS$_5$Cl and Li$_{5.45}$Al$_{0.1}$PS$_{4.75}$Cl$_{1.25}$. Given the slight amount of hydrolysis that takes place during the material transfer into the SEM chamber, the sulfur content could not be accurately quantified. A minimum of three measurements per composition are reported.

| Li$_{5.8}$Ga$_{0.1}$PS$_5$Cl | Atomic percent | | | Weight percent | | |
|---|---|---|---|---|---|---|
| Measurement | Ga | P | Cl | Ga | P | Cl |
| M1 | 1.73 | 15.95 | 16.34 | 3.64 | 14.93 | 17.50 |
| M2 | 1.71 | 17.15 | 14.26 | 3.61 | 16.10 | 15.31 |
| M3 | 1.10 | 17.42 | 14.66 | 2.33 | 16.46 | 15.85 |
| M4 | 1.50 | 15.87 | 17.05 | 3.17 | 14.88 | 18.30 |
| Average | 1.51 | 16.60 | 15.58 | 3.19 | 15.59 | 16.74 |
| Standard dev. | 0.25 | 0.69 | 1.15 | | | |
| **Normalized to Cl content** | **0.10** | **1.06** | **1.00** | | | |
| Li$_{5.45}$Al$_{0.1}$PS$_{4.75}$Cl$_{1.25}$ | Atomic percent | | | Weight percent | | |
| Measurement | Al | P | Cl | Al | P | Cl |
| M1 | 1.24 | 16.57 | 19.48 | 1.03 | 15.81 | 21.26 |
| M2 | 1.43 | 16.48 | 19.42 | 1.19 | 15.72 | 21.21 |

(continued)

| Li$_{5.45}$Al$_{0.1}$PS$_{4.75}$Cl$_{1.25}$ | Atomic percent | | | Weight percent | | |
|---|---|---|---|---|---|---|
| Measurement | Al | P | Cl | Al | P | Cl |
| M3 | 1.39 | 16.50 | 19.46 | 1.15 | 15.74 | 21.24 |
| Average | 1.35 | 16.52 | 19.45 | 1.12 | 15.76 | 21.24 |
| Standard dev. | 0.08 | 0.04 | 0.02 | | | |
| **Normalized** | **0.09** | **1.10** | **1.25** | | | |

The morphology of the microcrystalline material Li$_{5.8}$Ca$_{0.1}$PS$_5$Cl was studied by scanning electron microscopy. Figure 20 reveals that there is a distribution in the size of the particles, which is predominantly between 0.5 to 5 $\mu$m.

**Claims**

1.   Solid material having a composition according to general formula (I)

$$Li_{6+2*n-x-m*y}M_yPS_{5+n-x}X_{1+x} \qquad (I)$$

wherein

M is one or more selected from the group consisting of divalent metals Mg, Ca, Sr, Ba and Zn, and trivalent metals Sc, La, Al and Ga;
X is one or more selected from the group consisting of F, Cl, Br and I;

$$0 \leq x \leq 0.8;$$

$$0.01 \leq y \leq 0.25;$$

$$0 \leq n \leq 0.05;$$

m is 2 when M is a divalent metal and m is 3 when M is a trivalent metal
wherein the solid material comprises a crystalline phase having the argyrodite structure.

2.   Solid material according to claim 1, wherein in general formula (I)

M is one or more selected from the group consisting of Mg, Ca, Sr, Ba and Zn;

$$0.01 \leq y \leq 0.2;$$

and m is 2.

3.   Solid material according to claim 2 wherein M is Ca and X is Cl.

4.   Solid material according to claim 1, wherein in general formula (I)

M is one or more selected from the group consisting of Sc, La, Al and Ga;

$$0.01 \leq y \leq 0.15;$$

m is 3
and n = 0.

5. Solid material according to claim 4 wherein M is Al or Ga, and X is Cl.

6. Solid material according to any of claims 1 to 5, wherein

for the molar ratio X/P = a, the following condition is satisfied: $1.45 \leq a \leq 1.6$
and/or
for the molar ratio M/P = c, the following condition is satisfied: $0.01 \leq c \leq 0.15$.

7. Solid material according to claim 6, wherein
for the molar ratio X/M = a/c, the following condition is satisfied: $15.30 \leq a/c \leq 15.55$.

8. Process for preparing a solid material according to any of claims 1 to 7, said process comprising the steps of

a) preparing or providing a reaction mixture comprising the precursors

(1) $Li_2S$,
and/or
Li and S in elemental form
(2) one or more sulfides of phosphorus
(3) one or more compounds LiX wherein X is selected from the group consisting of F, Cl, Br and I
(4) one or more sulfides of metals M selected from the group consisting of divalent metals Mg, Ca, Sr, Ba and Zn, and trivalent metals Sc, La, Al and Ga
and/or
S in elemental form and one or more metals M selected from the group consisting of divalent metals Mg, Ca, Sr, Ba and Zn, and trivalent metals Sc, La, Al and Ga
(5) optionally one or more halides $MX_m$ wherein X is selected from the group consisting of F, Cl, Br and I; M is selected from the group consisting of divalent metals Mg, Ca, Sr, Ba and Zn, and trivalent metals Sc, La, Al and Ga; and m is 2 when M is a divalent metal and m is 3 when M is a trivalent metal

wherein in said reaction mixture the molar ratio of the elements Li, M, P, S and X matches general formula (I);
b) heat-treating the reaction mixture in a temperature range of from 500 °C to 800 °C for a total duration of from 3 hours to 350 hours so that a reaction product is formed, and cooling the obtained reaction product so that a solid material having a composition according to general formula (I) is obtained.

9. Process according to claim 8, wherein the reaction mixture is obtained by grinding together the precursors so that a powder is obtained, and optionally pressing the powder into pellets.

10. Process according to claim 8 or 9 wherein the precursors are

(1) $Li_2S$
(2) $P_2S_5$
(3) LiCl
(4) one or more compounds selected from CaS, $Al_2S_3$ and $Ga_2S_3$.

11. Use of a solid material according to any of claims 1 to 7 as a solid electrolyte for an electrochemical cell, wherein preferably the solid electrolyte is a component of a solid structure for an electrochemical cell selected from the group consisting of cathode, anode and separator.

12. A solid structure for an electrochemical cell, wherein said solid structure is selected from the group consisting of cathode, anode and separator, wherein said solid structure comprises a solid material according to any of claims 1 to 7.

13. An electrochemical cell comprising a solid material according to any of claims 1 to 7.

14. Electrochemical cell according to claim 13, wherein the solid material is a component of a solid structure as defined in any of claims 11 and 12.

**Patentansprüche**

1. Festes Material mit einer Zusammensetzung gemäß der allgemeinen Formel (I)

$$\text{Li}_{6+2*n-x-m*y}\text{M}_y\text{PS}_{5+n-x}\text{X}_{1+x} \qquad (I)$$

wobei

M eines oder mehrere ausgewählt aus der Gruppe bestehend aus zweiwertigen Metallen Mg, Ca, Sr, Ba und Zn und dreiwertigen Metallen Sc, La, Al und Ga ist;
X eines oder mehrere ausgewählt aus der Gruppe bestehend aus F, Cl, Br und I ist;

$$0 \leq x \leq 0,8;$$

$$0,01 \leq y \leq 0,25;$$

$$0 \leq n \leq 0,05;$$

m 2 ist, wenn M ein zweiwertiges Metall ist, und m 3 ist, wenn M ein dreiwertiges Metall ist;
wobei das feste Material eine kristalline Phase mit der Argyroditstruktur umfasst.

2. Festes Material gemäß Anspruch 1, wobei in der allgemeinen Formel (I)

M eines oder mehrere ausgewählt aus der Gruppe bestehend aus Mg, Ca, Sr, Ba und Zn ist;

$$0,01 \leq y \leq 0,2;$$

und m 2 ist.

3. Festes Material gemäß Anspruch 2, wobei M Ca ist und X Cl ist.

4. Festes Material gemäß Anspruch 1, wobei in der allgemeinen Formel (I)

M eines oder mehrere ausgewählt aus der Gruppe bestehend aus Sc, La, Al und Ga ist;

$$0,01 \leq y \leq 0,15;$$

m 3 ist;
und n = 0.

5. Festes Material gemäß Anspruch 4, wobei M Al oder Ga ist und X Cl ist.

6. Festes Material gemäß einem der Ansprüche 1 bis 5, wobei

für das Molverhältnis X/P = a die folgende Bedingung erfüllt ist: $1,45 \leq a \leq 1,6$
und/oder
für das Molverhältnis M/P = c die folgende Bedingung erfüllt ist: $0,01 \leq c \leq 0,15$.

7. Festes Material gemäß Anspruch 6, wobei für das Molverhältnis X/M = a/c die folgende Bedingung erfüllt ist: $15,30 \leq a/c \leq 15,55$.

8. Verfahren zur Herstellung eines festen Materials gemäß einem der Ansprüche 1 bis 7, wobei das Verfahren die Schritte umfasst:

a) Herstellen oder Bereitstellen eines Reaktionsgemischs umfassend die Vorläuferstoffe

(1) $Li_2S$
und/oder
Li und S in elementarer Form
(2) ein oder mehrere Sulfide von Phosphor
(3) eine oder mehrere Verbindungen LiX, wobei X ausgewählt ist aus der Gruppe bestehend aus F, Cl, Br und I
(4) ein oder mehrere Sulfide von Metallen M ausgewählt aus der Gruppe bestehend aus zweiwertigen Metallen Mg, Ca, Sr, Ba und Zn und dreiwertigen Metallen Sc, La, Al und Ga
und/oder
S in elementarer Form und ein oder mehrere Metalle M ausgewählt aus der Gruppe bestehend aus zweiwertigen Metallen Mg, Ca, Sr, Ba und Zn und dreiwertigen Metallen Sc, La, Al und Ga
(5) gegebenenfalls ein oder mehrere Halogenide $MX_m$, wobei X ausgewählt ist aus der Gruppe bestehend aus F, Cl, Br und I; M ausgewählt ist aus der Gruppe bestehend aus zweiwertigen Metallen Mg, Ca, Sr, Ba und Zn und dreiwertigen Metallen Sc, La, Al und Ga; und m 2 ist, wenn M ein zweiwertiges Metall ist, und m 3 ist, wenn M ein dreiwertiges Metall ist,

wobei in dem Reaktionsgemisch das Molverhältnis der Elemente Li, M, P, S und X der allgemeinen Formel (I) entspricht;
b) Wärmebehandeln des Reaktionsgemischs in einem Temperaturbereich von 500 °C bis 800 °C für eine Gesamtdauer von 3 Stunden bis 350 Stunden, so dass ein Reaktionsprodukt gebildet wird, und Abkühlen des erhaltenen Reaktionsprodukts, so dass ein festes Material mit einer Zusammensetzung gemäß der allgemeinen Formel (I) erhalten wird.

9. Verfahren gemäß Anspruch 8, wobei das Reaktionsgemisch durch Zusammenmahlen der Vorläuferstoffe erhalten wird, so dass ein Pulver erhalten wird, und gegebenenfalls Pressen des Pulvers zu Pellets.

10. Verfahren gemäß Anspruch 8 oder 9, wobei die Vorläuferstoffe sind

(1) $Li_2S$
(2) $P_2S_5$
(3) LiCl
(4) eine oder mehrere Verbindungen ausgewählt aus CaS, $Al_2S_3$ und $Ga_2S_3$.

11. Verwendung eines festen Materials gemäß einem der Ansprüche 1 bis 7 als fester Elektrolyt für eine elektrochemische Zelle, wobei der feste Elektrolyt vorzugsweise eine Komponente einer festen Struktur für eine elektrochemische Zelle ausgewählt aus der Gruppe bestehend aus Kathode, Anode und Separator ist.

12. Feste Struktur für eine elektrochemische Zelle, wobei die feste Struktur ausgewählt ist aus der Gruppe bestehend aus Kathode, Anode und Separator, wobei die feste Struktur ein festes Material gemäß einem der Ansprüche 1 bis 7 umfasst.

13. Elektrochemische Zelle, umfassend ein festes Material gemäß einem der Ansprüche 1 bis 7.

14. Elektrochemische Zelle gemäß Anspruch 13, wobei das feste Material eine Komponente einer festen Struktur gemäß einem der Ansprüche 11 und 12 ist.

**Revendications**

1. Matériau solide ayant une composition selon la formule générale (I)

$$Li_{8+2*n-x-m*y}M_yPS_{5+n-x}X_{1+x} \qquad (I)$$

M étant l'un ou plusieurs choisis dans le groupe constitué par les métaux divalents Mg, Ca, Sr, Ba et Zn, et les métaux trivalents Sc, La, Al et Ga ; X étant l'un ou plusieurs choisis dans le groupe constitué par F, Cl, Br et I ;

$$0 \leq x \leq 0,8 \;;$$

$$0,01 \leq y \leq 0,25 \;;$$

$$0 \leq n \leq 0,05 \;;$$

m étant 2 lorsque M est un métal divalent et m étant 3 lorsque M est un métal trivalent, le matériau solide comprenant une phase cristalline ayant la structure d'argyrodite.

2. Matériau solide selon la revendication 1, dans la formule générale (I)

M étant l'un ou plusieurs choisis dans le groupe constitué par Mg, Ca, Sr, Ba et Zn ;

$$0,01 \leq y \leq 0,2 \;;$$

et m étant 2.

3. Matériau solide selon la revendication 2, M étant Ca et X étant Cl.

4. Matériau solide selon la revendication 1, dans la formule générale (I)

M étant l'un ou plusieurs choisis dans le groupe constitué par Sc, La, Al et Ga ;

$$0,01 \leq y \leq 0,15 \;;$$

m étant 3
et n = 0.

5. Matériau solide selon la revendication 4, M étant Al ou Ga, et X étant Cl.

6. Matériau solide selon l'une quelconque des revendications 1 à 5,

pour le rapport molaire X/P = a, la condition suivante étant satisfaite : $1,45 \leq a \leq 1,6$
et/ou
pour le rapport molaire M/P = c, la condition suivante étant satisfaite : $0,01 \leq c \leq 0,15$.

7. Matériau solide selon la revendication 6,
pour le rapport molaire X/M = a/c, la condition suivante étant satisfaite : $15,30 \leq a/c \leq 15,55$.

8. Procédé pour la préparation d'un matériau solide selon l'une quelconque des revendications 1 à 7, ledit procédé comprenant les étapes de

a) préparation ou mise à disposition d'un mélange réactionnel comprenant les précurseurs

(1) $Li_2S$,
et/ou
Li et S sous forme élémentaire
(2) un ou plusieurs sulfures de phosphore
(3) un ou plusieurs composés LiX, X étant choisi dans le groupe constitué par F, Cl, Br et I
(4) un ou plusieurs sulfures de métaux M choisis dans le groupe constitué par les métaux divalents Mg, Ca, Sr, Ba et Zn, et les métaux trivalents Sc, La, Al et Ga
et/ou
S sous forme élémentaire et un ou plusieurs métaux M choisis dans le groupe constitué par les métaux divalents Mg, Ca, Sr, Ba et Zn, et les métaux trivalents Sc, La, Al et Ga

(5) éventuellement un ou plusieurs halogénures $MX_m$, X étant choisi dans le groupe constitué par F, Cl, Br et I ; M étant choisi dans le groupe constitué par les métaux divalents Mg, Ca, Sr, Ba et Zn, et les métaux trivalents Sc, La, Al et Ga ; et m étant 2 lorsque M est un métal divalent et m étant 3 lorsque M est un métal trivalent,

dans ledit mélange réactionnel, le rapport molaire des éléments Li, M, P, S et X correspondant à la formule générale (I) ;

b) traitement thermique du mélange réactionnel dans une plage de températures allant de 500 °C à 800 °C pendant une durée totale allant de 3 heures à 350 heures de sorte qu'un produit de réaction soit formé, et refroidissement du produit de réaction obtenu de sorte qu'un matériau solide ayant une composition selon la formule générale (I) soit obtenu.

9.  Procédé selon la revendication 8, le mélange réactionnel étant obtenu par broyage des précurseurs ensemble de sorte qu'une poudre soit obtenue, et éventuellement pressage de la poudre en pastilles.

10.  Procédé selon la revendication 8 ou 9, les précurseurs étant

(1) $Li_2S$
(2) $P_2S_5$
(3) LiCl
(4) un ou plusieurs composés choisis parmi CaS, $Al_2S_3$ et $Ga_2S_3$.

11.  Utilisation d'un matériau solide selon l'une quelconque des revendications 1 à 7 en tant qu'un électrolyte solide pour une cellule électrochimique, préférablement l'électrolyte solide étant un composant d'une structure solide pour une cellule électrochimique choisie dans le groupe constitué par une cathode, une anode et un séparateur.

12.  Structure solide pour une cellule électrochimique, ladite structure solide étant choisie dans le groupe constitué par une cathode, une anode et un séparateur, ladite structure solide comprenant un matériau solide selon l'une quelconque des revendications 1 à 7.

13.  Cellule électrochimique comprenant un matériau solide selon l'une quelconque des revendications 1 à 7.

14.  Cellule électrochimique selon la revendication 13, le matériau solide étant un composant d'une structure solide telle que définie dans l'une quelconque des revendications 11 et 12.

# FIG.1

## FIG.2

Legend:
— $Li_{5.6}Ca_{0.2}PS_5Cl$
I  Bragg reflections
*  $CaP_4O_{11}$
▼  $Li_3PO_4$
■  $Li_3PS_4$
◆  Not identified

## FIG.3

Legend:
— $Li_{5.35}Ca_{0.1}PS_{4.5}Cl_{1.55}$
I  Bragg reflections
•  LiCl

Intensity (a.u.)

$2\Theta$ (°)

FIG.4

FIG.5

FIG.6

# FIG.7

GOF: 3.54
Rwp: 6.4

Intensity (a.u.)

d-spacing (Å)

○ Observed

—— Calculated

— Difference

| $Li_{5.55}Ca_{0.1}PS_{4.75}Cl_{1.25}$

| $Li_3PO_4$

# FIG.8

# FIG.9

# FIG.10

# FIG.11

## FIG.12

## FIG.13

## FIG.14

## FIG.15

## FIG.16

## FIG.17

## FIG.18

a)

$E_{8.low\ T}=(0.383\pm0.004)$ eV

$R^2_{low\ T}=0.9999$

$E_{a.high\ T}=(0.257\pm0.007)$ eV

$R^2_{high\ T}=0.9994$

b)

$E_{a.low\ T}=(0.341\pm0.007)$ eV

$R^2_{low\ T}=0.9996$

$E_{a.high\ T}=(0.25\pm0.01)$ eV

$R^2_{high\ T}=0.9994$

$1000/T$ (K$^{-1}$)

# FIG.19

# FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020033809 A1
- US 8075865 B2
- EP 3407412 A1

### Non-patent literature cited in the description

- **P. ADELI ; J. D. BAZAK ; K. H. PARK ; I. KOCHETKOV ; A. HUQ ; G. R. GOWARD ; L. F. NAZAR.** *Angew. Chem. Int. Ed.,* 2019, vol. 58, 8681
- *Angew.Chem.,* 2019, vol. 131, 8773
- **S. G. J. VAN MEERTEN ; W. M. J. FRANSSEN ; A. P. M. KENTGENS.** *J. Magn. Reson.,* 2019, vol. 301, 56-66
- **D. H. WU ; A. D. CHEN ; C. S. JOHNSON.** *J. Magn. Reson. Ser. A,* 1995, vol. 115 (2), 260-264
- **W. S. PRICE.** *NMR Studies of Translational Motion;,* 2009
- **E. O. STEJSKAL ; J. E. TANNER.** *J. Chem. Phys.,* 1965, vol. 42 (1), 288-292
- **C. K. MOON ; H.-J. LEE ; K. H. PARK ; H. KWAK ; J. W. HEO ; K. CHOI ; H. YANG ; M.-S. KIM ; S.-T. HONG ; J. H. LEE.** *ACS Energy Lett,* 2018, vol. 3, 2504
- **W. S. PRICE.** *NMR Studies of Translational Motion,* 2009
- *Angew. Chem.,* 2019, vol. 131, 8773